(19)

Europäisches Patentamt

European Patent Office

Office européen des brevets

(11) **EP 4 428 182 A1**

(12) **EUROPEAN PATENT APPLICATION**

(43) Date of publication:
**11.09.2024 Bulletin 2024/37**

(21) Application number: **24154401.4**

(22) Date of filing: **29.01.2024**

(51) International Patent Classification (IPC):
**C08J 9/00** (2006.01)      **B29C 44/00** (2006.01)
**C08J 9/12** (2006.01)

(52) Cooperative Patent Classification (CPC):
**C08J 9/0066; B29C 44/00; C08J 9/122;**
C08J 2201/03; C08J 2203/06; C08J 2205/044;
C08J 2367/04

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.02.2023 JP 2023030415**

(71) Applicant: **Ricoh Company, Ltd.**
**Tokyo 143-8555 (JP)**

(72) Inventors:
- **MORIMOTO, Kazuhiro**
  **Tokyo, 143-8555 (JP)**
- **KUMAI, Yoshimitsu**
  **Tokyo, 143-8555 (JP)**
- **HIROKAWA, Yuya**
  **Tokyo, 143-8555 (JP)**
- **TAMURA, Risa**
  **Tokyo, 143-8555 (JP)**

(74) Representative: **Marks & Clerk LLP**
**15 Fetter Lane**
**London EC4A 1BW (GB)**

(54) **FOAM SHEET, METHOD FOR PRODUCING FOAM SHEET, AND MOLDED PRODUCT**

(57) A foam sheet includes a polylactic acid resin composition that includes a polylactic acid resin and inorganic particles. The polylactic acid resin includes 98 mol% or greater of D-lactic acid or L-lactic acid that is a constituent monomer unit of the polylactic acid resin. An amount of the polylactic acid resin is 98% by mass or greater relative to a total amount of organic matter of the foam sheet. The inorganic particles include grains of sheet silicate. The grains of the sheet silicate have a mean volume diameter of 10 $\mu$m or greater and 200 $\mu$m or less, and an aspect ratio of 10 or greater and 100 or less. An amount of the grains of the sheet silicate in the foam sheet is 2% by mass or less.

EP 4 428 182 A1

**Description**

BACKGROUND OF THE INVENTION

1. Field of the Invention

The disclosures herein generally relate to a foam sheet, a method for producing a foam sheet, and a molded product.

2. Description of the Related Art

Plastics are widely available and processed into various shapes of products, such as bags and containers. However, disposal of plastic products after use has been an issue because the plastic products are not easily decomposed in nature. As awareness towards the environmental issues has arisen in recent years, development of materials for plastic products have been actively conducted to replace non-biodegradable plastics that are not easily decomposed in nature with biodegradable biomass plastics that are easily decomposed in nature.

Among biodegradable biomass plastics, polylactic acid resins have been expected to be an alternative for a non-biodegradable plastic because the polylactic acid resins have similar characteristics to polystyrene that is readily available as plastics. One of usage embodiments of polystyrene is foam polystyrene. Foam polystyrene is obtained by foaming polystyrene to impart characteristics, such as a light weight, buffering properties, and thermal insulation properties. Such foam polystyrene is widely used. As an environmentally aware alternative for the foam polystyrene, foam polylactic acid using a polylactic acid resin, which is a biodegradable plastic, has been proposed (see, for example, Japanese Unexamined Patent Application Publication No. 2007-46019, Japanese Patent No. 5207277, Japanese Patent No. 5454137, and Japanese Unexamined Patent Application Publication No. 2006-328225).

For use of a polylactic acid resin as a food container, it is generally concerned that the container including the polylactic acid resin has low thermal resistance due to a low glass transition temperature (approximately 60°C) of the polylactic acid resin. It has been confirmed that thermal resistance is improved by increasing crystallinity of the polylactic acid resin during a molding process (see Japanese Patent No. 4842745 and Japanese Unexamined Patent Application Publication No. 2020-158608).

The present disclosure aims to provide a foam sheet having excellent thermal resistance, thermal insulation properties, strength, and biodegradability.

SUMMARY OF THE INVENTION

In one embodiment, a foam sheet includes a polylactic acid resin composition that includes a polylactic acid resin and inorganic particles. The polylactic acid resin includes 98 mol% or greater of D-lactic acid or L-lactic acid that is a constituent monomer unit of the polylactic acid resin. An amount of the polylactic acid resin is 98% by mass or greater relative to a total amount of organic matter of the foam sheet. The inorganic particles include grains of sheet silicate. The grains of the sheet silicate have a mean volume diameter of 10 $\mu$m or greater and 200 $\mu$m or less, and an aspect ratio of 10 or greater and 100 or less. An amount of the grains of the sheet silicate in the foam sheet being 2% by mass or less.

According to the present disclosure, a foam sheet having excellent thermal resistance, thermal insulation properties, strength, and biodegradability can be provided.

BRIEF DESCRIPTION OF THE DRAWINGS

Fig. 1 is a schematic view illustrating a profile of an outermost surface of the foam sheet of the present invention on a cross section of the foam sheet cut along a transverse direction (TD) of the foam sheet;
Fig. 2 is a schematic diagram illustrating an example of a continuous kneader used in the method for producing the foam sheet of the present disclosure;
Fig. 3 is a schematic view illustrating an example of a tandem type continuous foam sheet production apparatus used in the method for producing the foam sheet of the present disclosure; and
Fig. 4 is a schematic view illustrating an example of a channel of a die of an extruder used in the method for producing the foam sheet of the present disclosure.

DESCRIPTION OF THE PREFERRED EMBODIMENTS

In the following, embodiments of the present invention will be described with reference to the accompanying drawings.

Further, the present invention is not limited to these embodiments, but various variations and modifications may be made without departing from the scope of the present invention.

The foam sheet, the method for producing the foam sheet, the foam sheet production apparatus, and the molded product of the present disclosure will be concretely described hereinafter. The present disclosure is not limited to embodiments described hereinafter. The embodiments may be modified, for example, by substitution with another embodiment, addition, variation, and omission, without departing from the scope and the spirit of the present invention. These modified embodiments are also included within the scope of the present disclosure as long as the embodiments display the functions and effects of the present disclosure.

(Foam sheet)

The foam sheet of the present disclosure is a foam sheet obtained by foaming a polylactic acid resin composition (a composition including a polylactic acid resin). The polylactic acid resin composition includes a polylactic acid resin and inorganic particles. The polylactic acid resin includes 98 mol% or greater of D-lactic acid or L-lactic acid that is a constituent monomer unit of the polylactic acid resin. An amount of the polylactic acid resin is 98% by mass or greater relative to a total amount of organic matter of the foam sheet. The inorganic particles include grains of sheet silicate. A mean volume diameter of the grains of the sheet silicate is 10 $\mu$m or greater and 200 or less, and an aspect ratio of the grains of the sheet silicate is 10 or greater and 100 or less. An amount of the grains of the sheet silicate in the foam sheet is 2% by mass or less.

The present inventors have found the following problems that exist in the related art. Polylactic acid resins having a high crystallization speed and high optical purity are preferably used for improving productivity of molded products that are biodegradable and are thermally resistant. In the case where an expansion ratio of a foam sheet is increased to enhance functions, such as thermal insulation properties and strength, in other words, when a foam sheet having a low bulk density is produced, however, rapid crystallization is caused inside an extruder, as a foaming temperature is reduced, because a polylactic acid resin having a high optical purity has a high melting point and fast crystallization speed. Therefore, improvement in the expansion ratio, which is achieved by lowering the foaming temperature, cannot be achieved, and it may be difficult to stably carry out operations. In the case where a foam sheet is produced at a low temperature, even if the foam sheet is managed to be produced, crystallization progresses inside the foam sheet so that thermoforming may not be suitably performed on the foam sheet.

The present inventors have diligently conducted research to solve the above-described problems. As a result of the research, the present inventors have found that a foam sheet that has excellent thermal resistance, thermal insulation properties, strength, and biodegradability and is suitable as a material for food containers can be provided when the foam sheet has the above-described structure.

Since the foam sheet of the present disclosure is formed using a polylactic acid resin composition, the foam sheet of the present disclosure may be also referred to as a "polylactic acid foam sheet," or a "foamed polylactic acid composition sheet". Although it is more specifically described later, the foam sheet of the present disclosure has excellent heat resistance, and can be used, for example, as a heat resistant food container.

The foam sheet of the present disclosure encompasses a polylactic acid resin composition that is foamed and formed into a sheet.

[Physical properties of foam sheet]

The foam sheet is obtained by foaming the polylactic acid resin composition. Therefore, the physical properties of the foam sheet are identical to the physical properties of the polylactic acid resin composition, except the physical properties associated with the heat history or shapes of the foam sheet. Although the details are described later, the physical properties associated with the heat history of the foam sheet include cold crystallization enthalpy, and the physical properties associated with the shape of the foam sheet include a bulk density, a pore diameter, a basis weight, Ra, and RSm.

-Bulk density-

A bulk density of the foam sheet is not particularly limited, and may be appropriately selected according to the intended purpose. The bulk density of the foam sheet is preferably 0.063 g/cm$^3$ or greater and 0.156 g/cm$^3$ or less, more preferably 0.063 g/cm$^3$ or greater and 0.125 g/cm$^3$ or less, and yet more preferably 0.063 g/cm$^3$ or greater and 0.096 g/cm³ or less. When the bulk density of the foam sheet is 0.063 g/cm³ or greater and 0.156 g/cm³ or less, the foam sheet includes a large number of cells (pores) derived from air bubbles so that the foam sheet has high thermal insulation properties. Moreover, a thickness of the foam sheet is increased, and the moment of inertia of an area is increased so that the foam sheet having high strength can be achieved.

The bulk density of the foam sheet can be adjusted with an expansion ratio by varying a foaming temperature, an amount of a blowing agent, and a type of a die used during production of the foam sheet. Specifically, the expansion ratio can be increased by lowering the foaming temperature, increasing an amount of the blowing agent, or using a circular die as the die during the production of the foam sheet to thereby reduce the bulk density of the foam sheet.

The bulk density of the foam sheet of the present disclosure is a value measured in the following manner.

The foam sheet is left to stand for 24 hours or longer in the environment conditioned at a temperature of 23°C and relative humidity of 50%, followed by cutting out a test piece of 50 mm × 50 mm from the foam sheet. A bulk density of the cut-out test piece is determined by a fully automated densimeter (for example, DSG-1 available from Toyo Seiki Seisaku-sho, Ltd.) according to a buoyancy method.

According to the buoyancy method, a mass (g) of the test piece of the foam sheet is accurately weighed in the atmosphere, then a mass (g) of the test piece of the foam sheet is accurately weighed in water. The bulk density can be calculated from the measured values according to the following equation (1).

```
Bulk density [g/cm³] = density of water [g/cm³] × mass of test
piece in atmosphere [g]/(mass of test piece in atmosphere [g] -
mass of test piece in liquid [g])
                                                Equation (1)
```

-Pore diameter (median diameter)-

A pore diameter of the foam sheet is not particularly limited, and may be appropriately selected according to the intended purpose. As the pore diameter of the foam sheet, a median diameter of the pores of the foam sheet is preferably 200 µm or greater and 800 µm or less, more preferably 400 µm or greater and 800 µm or less, and yet more preferably 500 µm or greater and 650 µm or less. When the pore diameter (median diameter) of the foam sheet is 200 µm or greater, each cell wall has a sufficient thickness to achieve desired strength of the foam sheet. When the pore diameter (median diameter) of the foam sheet is 800 µm or less, thermal conductivity is regulated to a desired level to achieve desired thermal insulation properties.

A method for measuring the pore diameter (median diameter) of the foam sheet is not particularly limited, and may be appropriately selected according to the intended purpose.

For example, the foam sheet is cut by a sharp razor blade (e.g., 76 Razor, available from Nisshin EM Co., Ltd.) to expose a cross section of the foam sheet. The obtained cross section of the foam sheet is observed under a scanning electron microscope (SEM) (e.g., 3D real surface view microscope, VE-9800, available from KEYENCE CORPORATION). The magnification is adjusted to capture several tens to several hundreds of air bubbles within an observation range (for example, ×50 in the case where the pore diameter is approximately 100 µm) so that an image suitable for the below-described image analysis is obtained. Optionally, two or more views are captured, and the captured images may be connected to provide the connected image for image analysis. The segmentation of the obtained image is carried out, for example, by image analysis software (for example, MorphoLibJ plugins for Image J) according to the watershed segmentation (Morphological segmentation). At the time of the segmentation, the tolerance is adjusted per image (for example, 60) so that the segmentation is appropriately carried out. The dividing line of the segment is output as a binary image to determine a distribution of areas of air bubbles by a particle diameter analysis function of the image analysis software. During the determination of the distribution, air bubbles in contact with the edges of the image are excluded from the analysis. The cumulative distribution of the areas of the air bubbles is prepared by a spreadsheet to determine an area at 50% of the cumulative distribution. A circle equivalent diameter of the area at 50% of the cumulative distribution is calculated and determined as a pore diameter (median diameter).

-Basis weight-

A basis weight of the foam sheet is not particularly limited, and may be appropriately selected according to the intended purpose. In the case where the foam sheet is used as a food packaging container, the basis weight of the foam sheet is preferably 100 g/m² or greater and 300 g/m² or less, more preferably 140 g/m² or greater and 280 g/m² or less, and yet more preferably 250 g/m² or greater and 280 g/m² or less. When the basis weight of the foam sheet is 100 g/m² or greater and 300 g/m² or less, a foam sheet achieving both light weight and strength may be obtained.

A method for measuring the basis weight of the foam sheet of the present disclosure is not particularly limited. For example, the basis weight of the foam sheet can be measured in the following manner.

The foam sheet is left to stand for 24 hours or longer in the environment conditioned at a temperature of 23°C and relative humidity of 50%, followed by cutting out a test piece of 50 mm × 50 mm from the foam sheet. A mass of the test piece is measured by a balance. The basis weight of the foam sheet is calculated from the measured mass according to the following equation (2). The basis weight of the foam sheet is the arithmetic mean of values measured at three or more points along the extrusion direction of the foam sheet (MD) and three or more points along the direction perpendicular to the MD (TD).

$$\text{Basis weight } [g/m^2] = \text{measured mass } [g]/(0.05 \text{ m} \times 0.05 \text{ m})$$

$$\text{Equation (2)}$$

In the present specification, the term "machine direction (MD)" encompasses a processing direction (extrusion direction) of the foam sheet; and the term "transverse direction (TD)" encompasses a direction perpendicular to the machine direction (MD). The TD of the foam sheet also encompasses a width direction of the foam sheet.

-Outermost surface profile of foam sheet-

The profile of at least one surface of the foam sheet on a cross section along the thickness direction (THD) and the transverse direction (TD) of the foam sheet largely affects occurrences of defective molding, such as breakages during molding of the foam sheet, as described above. Especially when creases are formed at the surface of the foam sheet to cause corrugation, defective molding is likely to occur during molding of the foam sheet. However, corrugation that may be caused in a surface of the foam sheet of the present disclosure has a very small amplitude of the waveform form creating the creases.

--Ratio [Ra/RSm]--

The creases in the corrugated surface of the foam sheet can be represented by a ratio [Ra/RSm]. The Ra is an arithmetic average roughness calculated according to JIS B 0601:2013 (Geometrical Product Specifications (GPS)-surface texture: Profile method-terminologies, definitions, and surface texture parameters) and the RSm is an average length of a roughness profile element calculated according to JIS B 0601:2013. The Ra and the RSm are measured on a profile of at least one surface of the foam sheet on a cross section cut along a thickness direction (THD) of the foam sheet and a direction (TD) perpendicular to an extrusion direction of the foam sheet, and the profile is taken along the direction (TD) perpendicular to the extrusion direction of the foam sheet.

The profile of at least one surface of the foam sheet on the cross section along the thickness direction (THD) and the transverse direction (TD) of the foam sheet is specifically described with reference to a drawing.

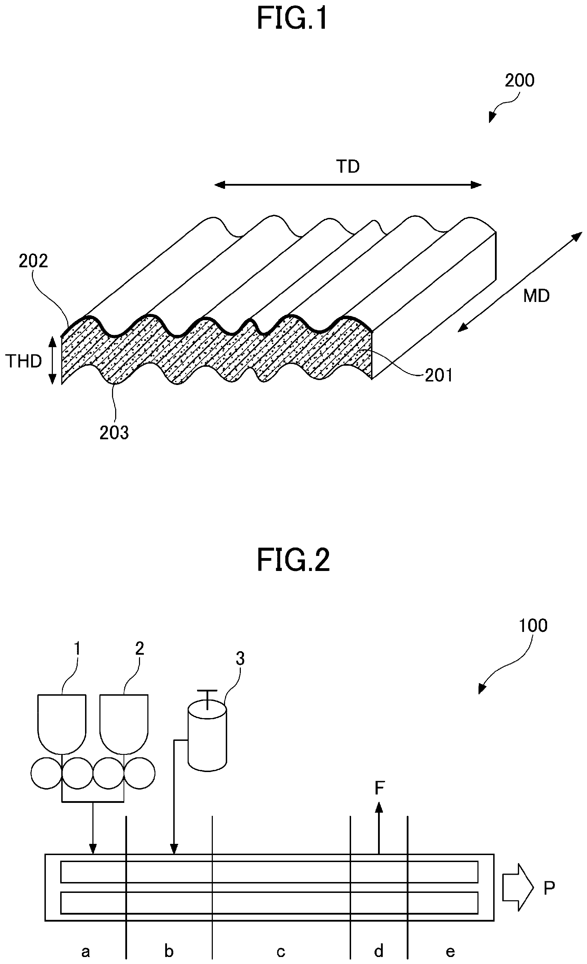

Fig. 1 is a schematic view (perspective view) illustrating a profile of at least one surface of the foam sheet of the present disclosure on a cross section along the thickness direction (THD) and the transverse direction (TD) of the foam sheet. In Fig. 1, the up-down direction is the thickness direction (THD) of the foam sheet 200, the left-right direction is the transverse direction (TD) of the foam sheet 200, and the depth direction is the machine direction (MD) of the foam sheet 200. As indicated with a thick line, the profile of at least one surface (outermost surface) of the foam sheet 200 on the cross section 201 along the thickness direction (THD) and the transverse direction (TD) of the foam sheet 200 has creases (a waveform) of corrugation (peaks and valleys of the waveform, periodical amplitudes of the waveform). In the present specification, one surface (outermost surface) 202 of the foam sheet 200 has been described, but the other surface (outermost surface) of the foam sheet 200 also has the same profile.

In the present specification, the profile of at least one surface of the foam sheet on the cross section along the THD and TD of the foam sheet may be referred to as an "outermost surface profile of the cross section of the foam sheet along TD" hereinafter.

The ratio [Ra/RSm] of the arithmetic average roughness R calculated according to JIS B 0601:2013 and the average length RSm of the roughness profile element calculated according to JIS B 0601:2013, both of which are measured on the outermost surface profile of the cross section of the foam sheet along the TD, is preferably 0.050 or less, more preferably 0.030 or less, and yet more preferably 0.015 or less. The ratio [Ra/RSm] of 0.050 or less indicates that the amplitude of the waveform of the corrugation of the outermost surface of the foam sheet, which is observed on the cross section of foam sheet along the TD, is very small. As the amplitude is very small, there are not many points at which breakages may occur during molding of the foam sheet so that occurrences of defective molding can be minimized.

--Arithmetic average roughness Ra--

The arithmetic average roughness Ra calculated according to JIS B 0601:2013 on the outermost surface profile of the cross section of the foam sheet along the TD (may be simply referred to as the "arithmetic average roughness Ra" hereinafter) correlates with the degree of the amplitude of the waveform of the corrugation of the foam sheet. As a value of the arithmetic average roughness Ra increases, the foam sheet has more noticeable creases (waveform) of the corrugation, and such creases may act as points at which breakages occur during molding of the foam sheet, leading to defective molding.

The arithmetic average roughness Ra is not particularly limited, and may be appropriately selected according to the intended purpose. The arithmetic average roughness Ra is preferably 0.15 mm or less, more preferably 0.08 mm or less. When the arithmetic average roughness Ra is 0.15 mm or less, occurrences of defective molding can be minimized during molding of the foam sheet.

--Average length RSm of roughness profile--

The average length RSm of the roughness profile element calculated according to JIS B 0601:2013 on the outermost surface profile of the cross section of the foam sheet along the TD (may be simply referred to as the "average length RSm of the roughness profile element" hereinafter) indicates a cycle of the waveform (creases) of the corrugation of the foam sheet. When the average length RSm of the roughness profile element is small, the cycle of the waveform of the corrugation of the foam sheet is short. The shorter cycle indicates the sharper change in height of the waveform (creases), and such creases may act as points at which breakages occur during molding of the foam sheet, leading to defective molding.

The average length RSm of the roughness profile element is not particularly limited, and may be appropriately selected according to the intended purpose. The average length RSm is preferably 4.0 mm or greater, more preferably 5.0 mm or greater. When the average length RSm of the roughness profile element is 4.0 mm or greater, molding failures during molding of the foam sheet can be minimized.

In the present disclosure, the outermost surface profile of the cross section of the foam sheet along the TD can be measured by a laser microscope or a 3D measurement system. The arithmetic average roughness Ra and the average length RSm of the roughness profile element can be calculated by software installed in the laser microscope or 3D measurement system to measure the outermost surface profile of the cross section of the foam sheet along the TD. A measuring device and measuring conditions are not particularly limited. For example, the measurement may be carried out in the following measuring method.

As a preparation method for a sample used for a measurement, first, a central part of the foam sheet relative to the TD is cut into a piece in the shape of a square of 5 cm $\times$ 5 cm (a square having a side of 5 cm), and the cut piece of the foam sheet is fixed on a stage of a laser microscope or 3D measurement system using a double-sided tape so that the cut piece of the foam sheet does not lift up.

The factor for causing defective molding during molding of the foam sheet is, particularly, a wave component having a short cycle and a large difference in height within the outermost surface profile of the cross section of the foam sheet along the TD. Conversely, a wave component having a long cycle within the outermost surface profile of the cross section of the foam sheet along the TD does not largely affect occurrences of defective molding during molding of the foam sheet. Accordingly, the measurement of the arithmetic average roughness Ra and the average length RSm of the roughness profile element is preferably carried out by excluding the influence of wave components having long cycles. When the average length RSm of the roughness profile element is evaluated, if values of 10 mm or greater are measured, the measurement is performed by setting the cutoff ($\lambda$c) of the wave component at 10 mm.

In the present specification, the arithmetic average roughness Ra and the average length RSm of the roughness profile element of the foam sheet are values calculated according to JIS B 0601:2013. Specifically, the arithmetic average roughness Ra and the average length RSm of the roughness profile element can be calculated by observing the outermost surface profile of the cross section of the foam sheet along the TD by the following measuring device under the following measuring conditions, and calculating using a software installed in the device. In the present specification, the arithmetic average roughness Ra and the average length RSm of the roughness profile element are each an average value of three or more values measured from three or more samples prepared by varying a position of the foam sheet from which each sample is cut out during the preparation of the samples.

[[Measuring device and measuring conditions]]

Device: 3D Measurement System VR-3200 (available from KEYENCE CORPORATION)

Magnification: ×12
Measuring mode: standard
Measuring direction: both sides
Adjustment of brightness for measurement: automatic (set value: 80)
Setting of standard plane: performing by selecting the x direction and the y direction of the image

-Cold crystallization enthalpy-

Cold crystallization enthalpy of the foam sheet is not particularly limited, and may be appropriately selected according to the intended purpose. The cold crystallization enthalpy of the foam sheet is preferably 20 J/g or greater, more preferably 30 J/g or greater. The foam sheet having the cold crystallization enthalpy of 20 J/g or greater and the recrystallization enthalpy of 20 J/g or greater means that the foam sheet has high crystallization speed, but the foam sheet still has a sufficient capacity to be crystalized.

In the thermoforming, the foam sheet is stretched at a temperature equal to or higher than a glass transition temperature of the polylactic acid resin composition. As the degree of crystallinity of the foam sheet increases, elongation at break of the foam sheet is likely to decrease. When the cold crystallization enthalpy of the foam sheet is 20 J/g or greater, the foam sheet is adequately stretched during thermoforming so that a breakage of a molded product can be minimized, and the foam sheet suitably follows a shape of a mold so that a desired shape is formed. The upper limit of the cold crystallization enthalpy of the foam sheet is not particularly limited, and may be appropriately selected according to the intended purpose. The upper limit of the cold crystallization enthalpy of the foam sheet is approximately 50 J/g or less.

The cold crystallization enthalpy of the foam sheet can be adjusted to the above-mentioned preferred range by appropriately setting a temperature of the entire production apparatus of the foam sheet or cooling the extruded foam sheet. Although it may depend on a concentration of the blowing agent in the foam sheet or kinds or amounts of components constituting the polylactic acid resin composition, the cold crystallization enthalpy of the foam sheet may be adjusted to the above-mentioned preferred range by setting the minimum temperature of the foam sheet production apparatus at a temperature that is lower than a melting point (Tm) of the polylactic acid resin by 20°C, i.e., [Tm - 20°C], or higher, and rapidly cooling the extruded foam sheet.

A method for cooling the foam sheet is not particularly limited, and any methods available in the related art may be used. Examples of the method include: a method where a cylindrical foam body ejected from a die is placed around a cooled mandrel to cool the foam body in the below-described method for producing the foam sheet; and a method where cooling air is blown onto an outer circumference of a cylindrical foam body in the below-described method for producing the foam sheet.

In the present specification, the cold crystallization enthalpy of the foam sheet can be determined by differential scanning calorimetry (DSC) according to JIS K 7122:2012 (Testing Methods for Heat of Transitions of Plastics).

Specifically, approximately 5 mg to approximately 10 mg of the foam sheet is collected, and the collected foam sheet is pressed on a hot plate heated at 65°C with a round copper bar (diameter of approximately 20 mm, similarly heated at 65°C) (with a load of approximately 500 gf) for 1 second to 3 seconds to flatten the foam sheet to prepare a sample. The flattening of the foam sheet is carried out to improve thermal contact between the sample and a sample pan to accurately measure cold crystallization enthalpy. The sample is measured by the following measuring device under the following measuring conditions, and is analyzed by the following analysis method. In the present disclosure, the cold crystallization enthalpy is the arithmetic mean of the results obtained by performing the series of processes from the preparation of the sample to the analysis 5 times.

[[Measuring device and measuring conditions]]

Device: Q-2000 (available from TA Instruments Japan Inc.)
Temperature program: Scanning from 10°C to 200°C at a heating rate of 10 °C/min (1st heating).
Analysis of cold crystallization enthalpy: The area of the exothermic peak derived from crystallization observed in the range of 60°C to 100°C within the 1st heating is determined by integration, and the area is determined as cold crystallization enthalpy. The baseline of the integration is a straight line connecting the points on the curve before and after the exothermic peak.

-Cold crystallization temperature-

A cold crystallization temperature of the foam sheet is not particularly limited, and may be appropriately selected according to the intended purpose. The cold crystallization temperature is preferably from 70°C to 100°C, more preferably 75°C to 85°C. The foam sheet having the cold crystallization temperature of 70°C or higher is preferred in view of moldability. The foam sheet having the cold crystallization temperature of 100°C or lower is preferred in view of thermal resistance.

The cold crystallization temperature of the foam sheet can be adjusted by a molar ratio of D-lactic acid or L-lactic acid that is a constituent monomer unit of the polylactic acid resin included in the foam sheet.

The cold crystallization temperature of the foam sheet can be determined by differential scanning calorimetry (DSC) according to JIS K 7121:2012 (Testing method for transition temperatures of plastics).

Specifically, from 5 mg to 10 mg of a sample that is cut out from the foam sheet is placed in a container of a differential scanning calorimeter (e.g., Q-2000, available from TA Instruments Japan Inc.), and the sample is heated from 10°C to 200°C at a heating rate of 10 °C/min. A peak top temperature of an exothermic peak observed at a temperature range equal to or higher than a glass transition temperature of the foam sheet is measured as a cold crystallization temperature of the foam sheet.

-Recrystallization enthalpy-

In the present specification, the foam sheet having high crystallinity means that recrystallization enthalpy of the foam sheet as measured by DSC is 20 J/g or greater. When the recrystallization enthalpy of the foam sheet is 20 J/g or greater, a shape of the foam sheet on a mold can be fixed during thermoforming owing crystallization, and thermal resistance can be imparted to a molded product within a realistic molding time period so that excellent thermoforming of the foam sheet is achieved.

The upper limit of the recrystallization enthalpy of the foam sheet is not particularly limited. The upper limit of the recrystallization enthalpy of the foam sheet of the present disclosure is from approximately 40 J/g to approximately 50 J/g. The recrystallization enthalpy of the foam sheet can be adjusted by increasing optical purity of the polylactic acid resin, or adding a component serving as a crystal nucleating agent (facilitating formation of crystal nuclei), or adding a component serving as a crystallization accelerator (accelerating growth of crystal nuclei), or using an epoxy group-containing (meth)acryl monomer and a styrene monomer as a chain extender (crosslinking agent) (an epoxy functional (meth)acryl-styrene-based chain extender). Among the above-listed examples, the recrystallization enthalpy of the foam sheet is preferably adjusted by both increasing the optical purity of the polylactic acid resin and using the epoxy functional (meth)acryl-styrene-based chain extender in view of suitable foamability of the polylactic acid resin composition, recyclability of the foam sheet, environmental adaptability, and the cost.

In extrusion molding of the polylactic acid resin composition having excellent crystallinity as described above, it is important to maintain the temperature from kneading to extrusion, excluding a material feeding area at a temperature equal to or higher than a melting point of the polylactic acid resin composition, or equal to or higher than a recrystallization temperature of the polylactic acid resin composition. The recrystallization temperature of the polylactic acid resin composition may vary depending on a heat history, kinds or amounts of components constituting the polylactic acid resin composition, or the degree of shear, thus the recrystallization temperature of the polylactic acid resin composition cannot be set unconditionally. In the present disclosure, the temperature from the kneading to the extrusion is preferably equal to or higher than a temperature [Tm - 20°C] that is lower than the melting point (Tm) of the polylactic acid resin composition by 20°C.

When the temperature from the kneading to the extrusion is lower than the temperature [Tm - 20°C] that is lower than the melting point (Tm) of the polylactic acid resin composition by 20°C, the polylactic acid resin composition is cooled to easily adjust the viscosity of the polylactic acid resin composition to suit foaming, but a supercooling degree (a deviation between the melting point and the resin temperature) increases. Therefore, there may be a risk such that an operation is terminated due to drastic crystallization inside an apparatus, or crystallization progresses in an obtained foam sheet, which may impair thermoforming properties. When the temperature from the kneading and the extrusion is equal to or higher than a temperature [Tm - 20°C] that is lower than the melting point (Tm) of the polylactic acid resin composition by 20°C, a risk of unintentional termination of operation due to crystallization can be minimized, an obtained foam sheet suitably has a low crystallinity, and a foam sheet having excellent thermoforming properties can be obtained. The crystallinity of the foam sheet can be evaluated with cold crystallization enthalpy as measured by DSC.

In the present specification, the recrystallization enthalpy of the foam sheet can be determined by differential scanning calorimetry according to JIS K 7122:2012 (Testing Methods for Heat of Transitions of Plastics). A differential scanning calorimeter (DSC) used for the DSC is not particularly limited. For example, the DSC can be performed in the following manner.

Specifically, approximately 5 mg to approximately 10 mg of the foam sheet is collected, and the collected foam sheet is pressed on a hot plate heated at 65°C with a round copper bar (diameter of approximately 20 mm, similarly heated at 65°C) (with a load of approximately 500 gf) for 1 second to 3 seconds to flatten the foam sheet to prepare a sample. The flattening of the foam sheet is carried out to improve thermal contact between the sample and a sample pan to accurately measure recrystallization enthalpy. The sample is measured by the following measuring device under the following measuring conditions, and is analyzed by the following analysis method. In the present disclosure, the recrystallization enthalpy is the arithmetic mean of the results obtained by performing the series of processes from the preparation of the sample to the analysis 5 times.

[[Measuring device and measuring conditions]]

Device: Q-2000 (available from TA Instruments Japan Inc.)
Temperature program: Scanning from 10°C to 200°C at a heating rate of 10 °C/min (1st heating), and retaining the temperature at 200°C for 1 minute, followed by cooling from 200°C to 25°C at a cooling rate of 10 °C/min (1st cooling). Analysis of recrystallization enthalpy: The area of the exothermic peak derived from crystallization observed during the 1st cooling is determined by integration, and the area is determined as recrystallization enthalpy. In the present disclosure, the position of the exothermic peak derived from crystallization is within the range of approximately 100°C to approximately 130°C. The baseline of the integration is a straight line connecting the points on the curve before and after the exothermic peak.

-Recrystallization temperature-

A recrystallization temperature of the foam sheet is not particularly limited, and may be appropriately selected according to the intended purpose. The recrystallization temperature of the foam sheet is preferably from 120°C to 150°C, more preferably from 130°C to 145°C. The foam sheet having the recrystallization temperature of 120°C or higher indicates that the polylactic acid resin has high crystallization speed, which is advantageous in thermal resistance as crystallization progresses during a molding process. When the recrystallization temperature of the foam sheet is 150°C or lower, crystallization does not progress excessively during production of the foam sheet, and breakage of the foam sheet is unlikely to occur during molding. Therefore, the recrystallization temperature of 150°C or lower is advantageous in view of moldability.

The recrystallization temperature of the foam sheet can be adjusted with a molar ratio of D-lactic acid or L-lactic acid that is a constituent monomer unit of the polylactic acid resin included in the foam sheet.

The recrystallization temperature of the foam sheet can be determined by differential scanning calorimetry (DSC) according to JIS K 7121:2012 (Testing method for transition temperatures of plastics).

Specifically, from 5 mg to 10 mg of a sample that is cut out from the foam sheet is placed in a container of a differential scanning calorimeter (e.g., Q-2000, available from TA Instruments Japan Inc.). Then, the sample is heated from 10°C to 200°C at a heating rate of 10 °C/min, and the temperature is retained at 200°C for 10 minutes, followed by cooling from 200°C to 10°C at a cooling rate of 10 °C/min. A peak top temperature of an exothermic peak is measured as a recrystallization temperature of the foam sheet.

-Melting point-

A melting point of the foam sheet can be determined by differential scanning calorimetry (DSC) according to JIS K 7121:2012 (Testing method for transition temperatures of plastics).

Specifically, a DSC measurement for the melting point of the foam sheet is performed, for example, by a differential scanning calorimeter (for example, Q-2000, available from TA Instruments Japan Inc.). A sample of the foam sheet (from 5 mg to 10 mg) is placed in a container of the differential scanning calorimeter, and the sample is heated to 200°C at a heating rate of 10 °C/min to measure the melting point.

A peak top temperature (peak melting temperature [Tpm]) of an endothermic peak, which is observed at the higher temperature side relative to the glass transition temperature and is derived from melting of crystals, is determined as a melting point. In a case where two or more endothermic peaks are observed at the higher temperature side relative to the glass transition temperature, a peak top temperature of the peak having the largest area is determined as a melting point of the foam sheet. The melting point of the foam sheet is in the range of approximately 160°C to approximately 190°C.

-Glass transition temperature-

A glass transition temperature of the foam sheet can be determined by differential scanning calorimetry (DSC) according to JIS K 7121:2012 (Testing method for transition temperatures of plastics).

Specifically, a DSC measurement for the glass transition temperature of the foam sheet is performed, for example, by a differential scanning calorimeter (for example, Q-2000, available from TA Instruments Japan Inc.). A sample (from 5 mg to 10 mg) that is cut out from the foam sheet is placed in a container of the differential scanning calorimeter, and the sample is heated to from 10°C to 200°C at a heating rate of 10 °C/min to measure the glass transition temperature.

In the present specification, the term "glass transition temperature" encompasses an extrapolated onset temperature (an initiation glass transition temperature (Tig)) described in JIS K 7121:2012. The glass transition temperature of the foam sheet is in the range of from approximately 55°C to approximately 70°C.

-Weight average molecular weight (Mw)-

A weight average molecular weight (Mw) of the foam sheet is not particularly limited, and may be appropriately selected according to the intended purpose. The weight average molecular weight (Mw) of the foam sheet is preferably 230,000 or greater and 600,000 or less, more preferably 250,000 or greater and 400,000 or less. When the weight average molecular weight (Mw) of the foam sheet is 230,000 or greater and 600,000 or less, the melt viscosity of the foam sheet is suitable for foaming to improve an expansion ratio so that suitable thermal insulation properties of the foam sheet are achieved.

The weight average molecular weight (Mw) of the foam sheet can be measured by gel permeation chromatography (GPC). The weight average molecular weight (Mw) of the foam sheet is calculated using calibration curves prepared by polystyrene samples whose weight average molecular weights are known (for example, A-500 (weight average molecular weight: 589), A-1000 (weight average molecular weight: 1,010), A-2500 (weight average molecular weight: 312), A-5000 (weight average molecular weight: 5,430), F-1 (weight average molecular weight: 9,490), F-2 (weight average molecular weight: 15,700), F-4 (weight average molecular weight: 37,200), F-10 (weight average molecular weight: 98,900), F-20 (weight average molecular weight: 189,000), F-40 (weight average molecular weight: 397,000), F-80 (weight average molecular weight: 707,000), and F-128 (weight average molecular weight: 1,110,000), all available from Tosoh Corporation) as the standards.

A sample provided for the GPC is prepared in the following manner. The foam sheet and chloroform are mixed so that a concentration of the foam sheet is approximately 2 mg/mL. The resulting mixture is shaken by a table top shaker (for example, MSI-60 available from AS ONE Corporation) for about half a day. After confirming that the foam sheet is dissolved, the resulting solution is filtered with a 0.45 $\mu$m-membrane filter to collect a filtrate. The collected filtrate is used as a sample. In the case the foam sheet is not easily dissolved, the mixture of the foam sheet and chloroform is heated at a temperature equal to or lower than the boiling point of chloroform to dissolve the foam sheet. A measuring device and measuring conditions of the GPC are not particularly limited. For example, the sample prepared in the above-described manner is subjected to a GPC measurement under the following conditions to measure a weight average molecular weight (Mw) of the foam sheet.

[[Measuring device and measuring conditions]]

Device: HLC-8320GPC (available from Tosoh Techno-System, Inc.)
Columns: TSKgel® guard column SuperHZ-L and 4 columns of TSKgel SuperHZM-M
Detector: RI
Measuring temperature: 40°C
Mobile phase: chloroform
Flow rate: 0.45 mL/min
Injection amount: 20 $\mu$L (microliters)

-Melt viscosity-

A melt viscosity of the foam sheet is not particularly limited, and may be appropriately selected according to the intended purpose. The melt viscosity of the foam sheet is preferably 10,000 Pa·s or greater and 40,000 Pa·s or less. When the melt viscosity of the foam sheet is 10,000 Pa·s or greater, the foam sheet having a low bulk density and excellent thermal insulation properties, strength, and surface properties may be obtained with a low crystallinity. When the melt viscosity of the foam sheet is 40,000 Pa·s or less, suitable productivity is achieved because the load applied to a foaming device is low.

The melt viscosity of the foam sheet can be measured, for example, by weighing 1.5 g of the foam sheet, drying the collected foam sheet in a dryer of 80°C for two hours to prepare a sample, and measuring the sample by a flow tester under the following measuring conditions.

[[Measuring device and measuring conditions]]

Device: CFT-100EX (available from Shimadzu Corporation)
Test conditions:

Constant temperature method
Test temperature: 190°C
Test force: 40 kgf
Heat remaining time: 180 seconds
Diameter of die orifice: 1 mm
Length of die: 1 mm

Analysis: the installed software, CFT-EX, is used, and a melt viscosity is calculated with the following calculation parameters.
Calculation parameters:

Limiting method
Calculation start point: 3.0 mm
Calculation end point: 7.0 mm
Sample density: 1 g/cm$^3$

Examples of a method for adjusting the melt viscosity of the foam sheet to the above-mentioned preferred range include a method where a polylactic acid resin having properties disclosed in the present disclosure and a chain extender (crosslinking agent) are subjected to melt kneading (reactive extrusion) to obtain a polylactic acid resin composition. The melt viscosity of the foam sheet may significantly vary depending on the temperature from kneading to extrusion. A kneading section preferably includes a section where a temperature is set at from 200°C to 240°C, more preferably from 220°C to 240°C.

<Polylactic acid resin composition>

In the present specification, the term "polylactic acid resin composition" encompasses the polylactic acid resin composition before being foamed.
The polylactic acid resin composition includes at least a polylactic acid resin and inorganic particles, preferably further includes a chain extender (may be also referred to as a "crosslinking agent"), and may further include other components, as necessary.

<<Polylactic acid resin>>

Since the polylactic acid resin is biodegradable and is decomposed by the actions of microorganisms, the polylactic acid resin has attracted attention as an environmentally friendly polymer material that has a low impact on the environment (see "Structure, properties, and biodegradability of aliphatic polyesters" Yoshio Inoue, POLYMERS, 2001, Vol. 50, No. 6, pp. 374-377). Examples of the polylactic acid resin include copolymers (DL-lactic acid) of D-lactic acid and L-lactic acid; homopolymers of D-lactic acid or L-lactic acid; and polymers obtained through ring-opening polymerization of at least one lactide selected from the group consisting of D-lactide, L-lactide, and DL-lactide. The above-listed examples may be used alone or in combination. The polylactic acid resin may be suitably synthesized for use, or appropriately selected from commercial products.
Synthesis of the polylactic acid resin may be carried out according to any methods available in the related art. Examples of the synthesis method include: a method where a lactic acid is used as a starting material to generate a lactide, and the lactide is polymerized through ring-opening polymerization using an initiator, such as alcohol; and a method where a lactic acid is directly polymerized through dehydration synthesis or a condensation reaction.
For the synthesis of the polylactic acid resin, in addition to the above-mentioned monomers, an initiator, a catalyst, an antioxidant, or an end capping agent may be used.
Examples of the initiator include water and alcohol including one or more active hydrogen groups.
The alcohol including one or more active hydrogen groups is not particularly limited, and may be appropriately selected according to the intended purpose. Examples of the alcohol including one or more active hydrogen groups include aliphatic alcohols, polyalkylene glycols, and multivalent alcohols. The above-listed examples may be used alone or in combination.

The multivalent alcohols are not particularly limited, and may be appropriately selected according to the intended purpose. Examples of the multivalent alcohols include glycerin, trimethylolpropane, 1,4-cyclohexanedimethanol, neopentyl glycol, and erythritol. The above-listed examples may be used alone or in combination.

[Physical properties of polylactic acid resin]

-Optical isomer-

When a copolymer of D-lactic acid and L-lactic acid (DL-lactic acid), or a ring-opening polymer of at least one lactide selected from the group consisting of D-lactide, L-lactide, and DL-lactide is used as the polylactic acid resin, as an amount of the optical isomer, the D-isomer or the L-isomer, whichever is smaller, decreases, crystallinity of the polylactic acid resin may increase to elevate a melting point or crystallization speed. As an amount of the optical isomer, the D-isomer or the L-isomer, whichever is smaller, increases, crystallinity of the polylactic acid resin is likely to decrease to eventually become amorphous.

In the present disclosure, it is important that a sufficient thermal resistance is imparted to a foam sheet by crystallization occurred due to foam growth during foaming. To this end, a molar ratio of the D-lactic acid or L-lactic acid that is a constituent monomer unit of the polylactic acid resin included in the polylactic acid resin composition is preferably 98 mol% or greater, and preferably 99 mol% or greater in the polylactic acid resin. Therefore, a polylactic acid resin including only one of the optical isomers, the D-lactic acid or the L-lactic acid, may be used as the polylactic acid resin. When the amount of the D-lactic acid or L-lactic acid that is a constituent monomer unit of the polylactic acid resin is less than 98 mol% in the polylactic acid resin, a molded product obtained by molding the foam sheet of the polylactic acid resin composition does not have suitable thermal resistance. When an amount of the D-lactic acid or L-lactic acid that is a constituent monomer unit of the polylactic acid resin is 98 mol% or greater in the polylactic acid resin, the crystallization speed is increased so that crystallization progresses during a molding process to improve thermal resistance of a molded product.

A ratio of the D-lactic acid or L-lactic acid that is a constituent monomer unit of the polylactic acid resin can be confirmed by liquid chromatography using a chiral column.

Specifically, the foam sheet is frozen and ground to prepare a powder of the foam sheet. Two hundred milligrams (200 mg) of the obtained powder of the foam sheet is weighed in an Erlenmeyer flask, followed by adding 30 mL of 1 N sodium hydroxide aqueous solution. The resulting mixture is heated at 65°C, while shaking the mixture, to completely dissolve the polylactic acid resin contained in the foam sheet. Subsequently, the pH of the resulting solution is adjusted to the range of 4 to 7 with 1N hydrochloric acid, and the resulting solution is diluted to the predetermined volume using a volumetric flask to obtain a polylactic acid resin solution. The polylactic acid resin solution is filtered with a membrane filter of 0.45 $\mu$m, followed by analyzing with a liquid chromatograph. An area ratio is calculated from peaks derived from the D-lactic acid and the L-lactic acid based on the obtained chart, and the area ratio is determined as an abundance ratio to calculate an amount of the D-lactic acid and an amount of the L-lactic acid. The above-described series of processes is performed three times. An arithmetic mean of the measured values is determined as each of an amount of the D-lactic acid and an amount of the L-lactic acid constituting the polylactic acid resin in the foam sheet.

The measuring device and measuring conditions of the liquid chromatography are not particularly limited. For example, the liquid chromatography can be performed by the following measuring device under the following measuring conditions.

[[Measuring device and measuring conditions]]

High performance liquid chromatography (HPLC) device (liquid chromatograph): PU-2085Plus system (available from JASCO Corporation)
Column: Chromolith® coated with SUMICHIRAL OA-5000 (inner diameter: 4.6 mm, length: 250 mm)(available from Sumika Chemical Analysis Service, Ltd.)
Column temperature: 25°C
Mobile phase: a mixed liquid of a 2 mM $CuSO_4$ aqueous solution and 2-propanol ($CuSO_4$ aqueous solution:2-propanol (volume ratio) = 95:5)
Mobile phase flow rate: 1.0 mL/min
Detector: UV 254 nm
Injecting amount: 20 $\mu$L (microliters)

In the case where the above-described liquid chromatography is performed on the foam sheet, and the larger area between an area of a peak derived from the D-lactic acid and an area of a peak derived from the L-lactic acid is 98% or greater, an amount of the D-lactic acid or the L-lactic acid that is a constituent monomer unit of the polylactic acid resin included in the foam sheet is determined to be 98 mol% or greater in the polylactic acid resin.

Based on the obtained chart, a ratio of an area of the peak derived from D-lactic acid or L-lactic acid, whichever is larger, is calculated and determined as Area Ratio 1 relative to a total area of the peaks derived from the D-lactic acid and the L-lactic acid. The ratio of the optical isomer, the D-lactic acid or the L-lactic acid, whichever is smaller in the amount, can be also determined by the following equation (3).

```
(Ratio of optical isomer D-lactic acid or L-lactic acid having
    smaller amount [mol%]) = 100 × (1-Area Ratio 1) [mol%]
                                                    Equation (3)
```

-Weight average molecular weight-

A weight average molecular weight (Mw) of the polylactic acid resin is not particularly limited, and may be appropriately selected according to the intended purpose. The weight average molecular weight (Mw) is preferably 180,000 or greater and 320,000 or less, more preferably 210,000 or greater and 310,000 or less. When the weight average molecular weight (Mw) of the polylactic acid resin is 180,000 or greater and 320,000 or less, a viscosity of the polylactic acid resin composition can be adjusted to the suitable range for foaming to minimize fusion of air bubbles and breakage of air bubbles during production of the foam sheet, so that a foam sheet having a desired expansion ratio and surface properties can be stably obtained. When the weight average molecular weight (Mw) of the polylactic acid resin is 180,000 or less, an amount of a chain extender used to achieve a suitable range of a viscosity of the polylactic acid resin composition for foaming increases, or it may be difficult to adjust the viscosity of the polylactic acid resin composition to suit foaming. Since the chain extender is typically a petroleum-derived compound and is non-biodegradable, an amount of the chain extender used is preferably as small as possible in view of reduction in possible impacts on the environment. When the weight average molecular weight (Mw) of the polylactic acid resin is 320,000 or greater, a viscosity of the polylactic acid resin composition is likely to change according to an amount of the chain extender used. Therefore, controllability of the viscosity of the polylactic acid resin composition is reduced so that it may be difficult to stably produce the foam sheet.

The weight average molecular weight (Mw) of the polylactic acid resin can be measured by gel permeation chromatography (GPC). The weight average molecular weight (Mw) of the polylactic acid resin is calculated using calibration curves prepared by polystyrene samples whose weight average molecular weights are known (for example, A-500 (weight average molecular weight: 589), A-1000 (weight average molecular weight: 1,010), A-2500 (weight average molecular weight: 312), A-5000 (weight average molecular weight: 5,430), F-1 (weight average molecular weight: 9,490), F-2 (weight average molecular weight: 15,700), F-4 (weight average molecular weight: 37,200), F-10 (weight average molecular weight: 98,900), F-20 (weight average molecular weight: 189,000), F-40 (weight average molecular weight: 397,000), F-80 (weight average molecular weight: 707,000), and F-128 (weight average molecular weight: 1,110,000), all available from Tosoh Corporation) as the standards.

A sample provided for the GPC is prepared in the following manner. The polylactic acid resin and chloroform are mixed so that a concentration of the polylactic acid resin is approximately 2 mg/mL. The resulting mixture is shaken by a table top shaker (for example, MSI-60 available from AS ONE Corporation) for about half a day. After confirming that the polylactic acid resin is dissolved, the resulting solution is filtered with a 0.45 μm-membrane filter to collect a filtrate. The collected filtrate is used as a sample. In the case the polylactic acid resin is not easily dissolved, the mixture of the polylactic acid resin and chloroform is heated at a temperature equal to or lower than the boiling point of chloroform to dissolve the polylactic acid resin. The sample prepared in the above-described manner is measured by the same measuring device under the same measuring conditions as in the measurement of the weight average molecular weight (Mw) of the foam sheet.

-Acid value-

An acid value of the polylactic acid resin in the polylactic acid resin composition is not particularly limited, and may be appropriately selected according to the intended purpose. The acid value of the polylactic acid resin is preferably 5 mgKOH/g or less. When the acid value of the polylactic acid resin is 5 mgKOH/g or less, a viscosity of the polylactic acid resin composition is easily adjusted to suit foaming, and decomposition of the polylactic acid resin may be minimized during storage.

A method for measuring the acid value of the polylactic acid resin is not particularly limited. For example, the acid value of the polylactic acid resin can be determined by titration.

Specifically, approximately 1 g to approximately 3 g of the polylactic acid resin is collected in an Erlenmeyer flask, followed by adding 40 mL of dichloromethane. The resulting mixture is shaken at room temperature for about half a day to prepare a dichloromethane solution of the polylactic acid resin. The obtained solution is provided for measurement. When a viscosity of the dichloromethane solution is high, the viscosity of the dichloromethane solution is adjusted by reducing the amount of the polylactic acid resin or increasing the amount of the dichloromethane. To the dichloromethane solution serving as a sample, phenolphthalein is added as an indicator. The sample and a blank are each titrated using a 0.01 N potassium hydroxide ethanol solution, and an acid value of the sample is calculated according to the following equation (4).

```
Acid value [mgKOH/g] = (titration amount [mL] - blank [mL]) ×
factor × 0.01 [N] × 56.1 [g/mol]/(mass of sample [g])
                                             Equation (4)
```

-Moisture content-

A moisture content of the polylactic acid resin is preferably reduced to 500 ppm or less prior to production of the polylactic acid resin composition or the foam sheet. When the moisture of the polylactic acid resin is 500 ppm or less, the polylactic acid resin composition is likely to be adjusted to have the viscosity suitable for foaming.

A method for measuring the moisture content of the polylactic acid resin is not particularly limited, and any methods available in the related art may be used. Examples of the method include Karl Fischer titration.

A method for drying the polylactic acid resin is not particularly limited, and any methods available in the related art may be used. Examples of the method include a method using a hot air dryer or a vacuum dryer.

A temperature for the drying is not particularly limited, and is preferably from 60°C to 80°C.

-Amount-

In view of biodegradability and recyclability (easiness in recycling), an amount of the polylactic acid resin in the polylactic acid resin composition is 98% by mass or greater, relative to a total amount of organic matter of the polylactic acid resin composition. The amount of the polylactic acid resin relative to a total amount of organic matter of the polylactic acid resin composition is identical to an amount of the polylactic acid resin relative to a total amount of organic matter of the foam sheet because the foam sheet is formed by foaming the polylactic acid resin composition.

The organic matter in the polylactic acid resin composition is mainly the polylactic acid resin. Examples of the organic matter other than the polylactic acid resin include organic nucleating agents serving as the below-described foam nucleating agent, and chain extenders. When an inorganic nucleating agent is used as the foam nucleating agent of the foam sheet, the inorganic nucleating agent is not regarded as the organic matter.

The amount of the polylactic acid resin relative to a total amount of the organic matter of the polylactic acid resin composition can be determined by calculating the total amount of the organic matter from a blending ratio (composition ratio) of constituent components used when the polylactic acid resin composition is prepared. When the blending ratio is not known, the total amount of the organic matter of the polylactic acid resin composition may be determined by nuclear magnetic resonance spectroscopy (NMR) in the following manner.

As a solvent used for the nuclear magnetic resonance spectroscopy, a solvent used is prepared by weighing approximately 100 mg of a 1,3,5-trimethoxybenzene standard (for quantitative NMR, available from FUJIFILM Wako Pure Chemical Corporation) as an internal standard substance, and dissolving the collected standard substance in deuterated chloroform (including 0.3% by volume of tetramethylsilane (TMS)) in a 10 mL volumetric flask.

A sample provided for the nuclear magnetic resonance spectroscopy is prepared in the following manner. The above-prepared solvent is added to the polylactic acid resin composition or the foam sheet so that a concentration of the polylactic acid resin composition or the foam sheet is 10 mg/mL. The resulting mixture is shaken by a table top shaker (MSI-60, available from AS ONE Corporation) for about half a day to dissolve the polylactic acid resin composition or the foam sheet. In order to minimize a change in the concentration of the sample due to evaporation of the solvent as much as possible, the smallest container available is selected for use in the shaking. The sample prepared in the above-described manner is placed in a sample tube having a diameter of 5 mm, which is provide for NMR.

Quantitative $^1$H nuclear magnetic resonance spectroscopy ($^1$H-NMR) is performed on the above-prepared sample by the following measuring device under the following measuring conditions according to JIS K 0138:2018 (General rules for quantitative nuclear magnetic resonance spectroscopy (qNMR)).

[[Measuring device and measuring conditions]]

Nuclear magnetic resonance (NMR) spectrometer: JNM-ECX-500 FT-NMR (available from JEOL Ltd.)
Observed nuclei: 1H
Measuring temperature: 30°C
Spin: off
Digital resolution: 0.25 Hz
Observation range: -0.5 ppm to 15 ppm
Pulse angle: 90 degrees
Relaxation time: 60 seconds
Number of integrations: 16 times (dummy scanning is performed twice before the actual measurement)
13C decoupling: performed

Based on the obtained data, integration of the following chemical shift peaks is carried out to calculate an integration ratio according to the following equation (5).

```
Integration 1 (derived from polylactic acid resin): 5.2 ppm

Integration 2 (derived from internal standard): 6.1 ppm

Integration ratio = Integration 1/(Integration 2 × sample mass)

                                              Equation (5)
```

NMR is performed on a polylactic acid resin whose purity is known using the same solvent used for the above-mentioned sample in the same manner as in the above-described NMR. A ratio of the integration ratio of the polylactic acid resin whose purity had been known according to the equation (5) and the integration ratio of the sample is determined to calculate an amount of the polylactic acid resin relative to a total amount of organic matter in the polylactic acid resin composition or the foam sheet according to the following equation (6). The series of processes from the preparation of the sample to the analysis is performed three times, and the arithmetic mean of the obtained amounts of the polylactic acid resin is determined as an amount of the polylactic acid resin relative to a total amount of organic matter in the polylactic acid resin composition or the foam sheet.

```
Amount of polylactic acid resin [% by mass] = 100 × purity [% by

mass] of polylactic acid resin whose purity is known ×

(integration ratio of sample)/(integration ratio of polylactic

acid resin whose purity is known)

                                              Equation (6)
```

-Melting point-

A melting point of the polylactic acid resin can be determined by differential scanning calorimetry (DSC) according to JIS K 7121:2012 (Testing method for transition temperatures of plastics).
Specifically, a DSC measurement for the melting point of the polylactic acid resin is performed, for example, by a differential scanning calorimeter (for example, Q-2000, available from TA Instruments Japan Inc.). A sample of the polylactic acid resin (from 5 mg to 10 mg) is placed in a container of the differential scanning calorimeter, and the sample is heated to 200°C at a heating rate of 10 °C/min to measure the melting point.
A peak top temperature (peak melting temperature [Tpm]) of an endothermic peak, which is observed at the higher temperature side relative to the glass transition temperature and is derived from melting of crystals, is determined as a melting point. In a case where two or more endothermic peaks are observed at the higher temperature side relative to the glass transition temperature, a peak top temperature of the peak having the largest area is determined as a melting point of the polylactic acid resin. The melting point of the polylactic acid resin is in the range of approximately 150°C to approximately 190°C.

-Glass transition temperature-

A glass transition temperature of the polylactic acid resin can be determined by differential scanning calorimetry (DSC) according to JIS K 7121:2012 (Testing method for transition temperatures of plastics).

Specifically, a DSC measurement for the glass transition temperature of the polylactic acid resin is performed, for example, by a differential scanning calorimeter (for example, Q-2000, available from TA Instruments Japan Inc.). A sample (from 5 mg to 10 mg) of the polylactic acid resin is placed in a container of the differential scanning calorimeter, and the sample is heated from 10°C to 200°C at a heating rate of 10 °C/min to measure the glass transition temperature.

In the present specification, the term "glass transition temperature" encompasses an extrapolated onset temperature (an initiation glass transition temperature (Tig)) described in JIS K 7121:2012. The glass transition temperature of the polylactic acid resin is in the range of approximately 55°C to approximately 70°C.

-Melt viscosity-

A melt viscosity of the polylactic acid resin is not particularly limited, and may be appropriately selected according to the intended purpose. The melt viscosity of the polylactic acid resin is preferably 500 Pa·s or greater and 1,500 Pa·s or less. When the melt viscosity of the polylactic acid resin is 500 Pa·s or greater and 1,500 Pa·s or less, the viscosity of the polylactic acid resin composition is easily adjusted to the viscosity suitable for foaming so a load applied to a foaming device is reduced to increase productivity, and a foam sheet having a low bulk density and having excellent surface properties can be obtained.

The melt viscosity of the polylactic acid resin can be measured, for example, by weighing 1.5 g of the polylactic acid resin, drying the collected polylactic acid resin in a dryer of 80°C for two hours to prepare a sample, and measuring the sample by a flow tester under the following measuring conditions.

[[Measuring device and measuring conditions]]

Device: CFT-100EX (available from Shimadzu Corporation)
Test conditions:

Constant temperature method
Test temperature: 190°C
Test force: 40 kgf
Heat remaining time: 180 seconds
Diameter of die orifice: 1 mm
Length of die: 1 mm

Analysis: the installed software, CFT-EX, is used, and a melt viscosity is calculated with the following calculation parameters.
Calculation parameters:

Limiting method
Calculation start point: 3.0 mm
Calculation end point: 7.0 mm
Sample density: 1 g/cm$^3$

-Ratio between melt viscosity of foam sheet and melt viscosity of polylactic acid resin-

A ratio of the melt viscosity of the foam sheet to the melt viscosity of the polylactic acid resin is not particularly limited, and may be appropriately selected according to the intended purpose. The ratio of the melt viscosity of the foam sheet to the melt viscosity of the polylactic acid resin is preferably 7 or greater and 80 or less. When the ratio of the melt viscosity of the foam sheet to the melt viscosity of the polylactic acid resin is 7 or greater and 80 or less, a load applied to a foaming device is reduced to improve productivity, and a foam sheet having a low bulk density, and excellent thermal insulation properties, strength, and surface properties is obtained with low crystallinity.

The ratio of the melt viscosity of the foam sheet to the melt viscosity of the polylactic acid resin can be determined by the following equation (7).

$$\text{Ratio of melt viscosity of foam sheet to melt viscosity of polylactic acid}$$

$$\text{resin = melt viscosity of foam sheet/melt viscosity of polylactic acid resin}$$

$$\text{Equation (7)}$$

<<Inorganic particles>>

The polylactic acid resin composition includes inorganic particles. The inorganic particles are suitably used as a foam nucleating agent and/or a foam regulator. The inorganic particles for use in the present disclosure include grains of sheet silicate.

The grains of the sheet silicate (may be referred to as sheet silicate grains hereinafter) each have a high aspect ratio and are effectively aligned in a cell wall. Since a gas component cannot pass through without traveling around the aligned sheet silicate grains (a winding path effect), a retention rate of the gas component is increased to improve an expansion ratio. As the expansion ratio is increased, an amount of the gas included in a resulting foam sheet is increased to improve thermal insulation properties of the foam sheet. As the expansion ratio is improved, a thickness of the foam sheet is increased and the moment of inertia of an area is increased so that strength of the foam sheet is improved. Accordingly, the improvement of the expansion ratio of the foam sheet can improve thermal insulation properties and strength of the foam sheet while retaining a light weight of the foam sheet.

-Mean volume diameter (Mv)-

A mean volume diameter (Mv) of the sheet silicate grains is 10 $\mu$m or greater and 200 $\mu$m or less, preferably 15 $\mu$m or greater and 200 $\mu$m or less. When the mean volume diameter (Mv) of the sheet silicate grains is less than 10 $\mu$m, a path through which a gas travels within the foamed polylactic acid resin composition is short so that the gas component cannot be sufficiently retained. Therefore, an expansion ratio may not be improved. When the mean volume diameter (Mv) of the sheet silicate grains is greater than 200 $\mu$m, a cell wall of an air bubble is fragile, leading to breakage of the air bubble. Therefore, the expansion ratio may not be improved.

The mean volume diameter (Mv) of the sheet silicate grains may be measured on sheet silicate grains before adding to prepare the polylactic acid resin composition, or may be measured on the sheet silicate grains collected from the foam sheet, for example, by the following method.

A sample is cut out from the foam sheet. The sample is placed in a crucible, and combustion of the sample is carried out by a muffle furnace (e.g., FP-310, available from Yamato Scientific Co., Ltd.) for four hours at 600°C (degrees Celsius) to burn an organic component in the sample. Then, the crucible is cooled for 1 hour in a desiccator to obtain inorganic particles as a sample for measurement. In the case where two or more kinds of inorganic particles are included in the sample, the sheet silicate can be separated by further performing gravity separation.

The method for measuring the mean volume diameter (Mv) of the sheet silicate grains is not particularly limited. For example, the mean volume diameter (Mv) of the sheet silicate grains can be measured by the following measuring device under the following measuring conditions. In the present disclosure, the mean volume diameter (Mv) of the sheet silicate grains is determined as a mean diameter of the sheet silicate grains.

((Measuring device and measuring conditions))

Device: Microtrac MT3300EX (available from MicrotracBELL Corp.) Measuring conditions:

Transparency: transparent
Refractive index: 1.53
Shape: non-spherical
Solvent: AIR
Refractive index of solvent: 1
Measuring time: 10 seconds
Extension filter: not activated
Distribution: volume distribution

-Aspect ratio-

An aspect ratio of the sheet silicate grains is 10 or greater and 100 or less, preferably 25 or greater and 75 or less. When the aspect ratio of the sheet silicate grains is less than 10, the sheet silicate grains are not desirably aligned so that a sufficient winding path effect cannot be obtained. Therefore, the expansion ratio of the foaming sheet may not be improved. When the aspect ratio of the sheet silicate grains is greater than 100, the sheet silicate grains are further pulverized during kneading of the polylactic acid resin composition with the sheet silicate grains. As a result, the aspect ratio is further reduced, and a sufficient effect may not be obtained.

The aspect ratio of the sheet silicate grains is determined by the following equation (8).

```
Aspect ratio = mean volume diameter (Mv) of sheet silicate
gains/average thickness of sheet silicate grains
                                            Equation (8)
```

Methods for measuring the mean volume diameter (Mv) of the sheet silicate grains and the average thickness of the sheet silicate grains in the equation (8) are not particularly limited. For example, the mean volume diameter (Mv) may be determined by the above-described method, and the thickness may be determined in the following method.

As the measuring method of the average thickness of the sheet silicate grains, for example, the sheet silicate grains are observed under a scanning electron microscope (SEM) (e.g., 3D real surface view microscope, VE-9800, available from KEYENCE CORPORATION). The magnification is adjusted to capture several tens to several hundreds of the sheet silicate grains within an observation range. Optionally, two or more views are captured, and the captured images may be connected and provided for image analysis. On the downloaded image, the sheet silicate grain whose plane exposing a thickness is aligned along horizontally in the observation view is selected, and the thickness of the selected grain is measured. The measurement is carried out on 50 grains, and the arithmetic mean of the measured values from the 50 grains is calculated, and is determined as an average thickness of the sheet silicate grains.

An amount of the sheet silicate grains in the polylactic acid resin composition is 2% by mass or less, preferably 0.1% by mass or greater and 2% by mass or less, more preferably 0.5% by mass or greater and 2% by mass or less, and yet more preferably 1.0% by mass or greater and 1.7% by mass or less, relative to a total mass of the polylactic acid resin composition. When an amount of the sheet silicate grains is greater than 2% by mass, an expansion ratio may be reduced due to breakage of cell walls of air bubbles with the sheet silicate so that a foam sheet may not have a sufficient strength, or a specific gravity of the polylactic acid resin composition is increased so that a foam sheet having a light weight may not be obtained. When the amount of the sheet silicate grains is 0.1% by mass or greater and 2% by mass or less, a desired expansion ratio is achieved and a foam sheet having a sufficient strength can be formed as the sheet silicate grains do not break cell walls of air bubbles, and a desired specific gravity of the polylactic acid resin composition is achieved so that a foam sheet having a light weight is formed.

The amount of the sheet silicate grains in the polylactic acid resin composition can be determined by calculating the amount of the sheet silicate grains from a blending ratio (composition ratio) of constituent components constituting the polylactic acid resin composition when the polylactic acid resin composition is prepared. When the blending ratio of the sheet silicate grains is unknown, the amount of the sheet silicate grains may be determined according to an ash determination method as described below.

The ash is determined in the following manner.

In a 100 mL crucible whose mass is weighed by a precision balance to the 4th decimal place value, a sample that is cut out from the foam sheet is weighed and collected by approximately 3 g, and a total mass of the crucible and the sample is precisely weighed. The crucible is placed in a muffle furnace (e.g., FP-310, available from Yamato Scientific Co., Ltd.), and the sample is burned for 4 hours at 600°C to burn an organic component in the sample. Then, the crucible is cooled for 1 hour in a desiccator. The mass of the crucible is again accurately weighed with the balance to measure a total mass of the crucible and the ash. An amount of the ash, specifically, an amount of the inorganic particles, can be calculated by the following equation (9). The above-described measurement is performed twice (n = 2), and an average value of the measured values is calculated and determined as an amount of the inorganic particles.

```
Amount of inorganic particles [% by mass]=
amount of ash [% by mass] =
(total mass of crucible and sample after combustion and cooling
[g]- mass of crucible [g])/(total mass of crucible and sample
before combustion [g] - mass of crucible [g]) × 100
                                            Equation (9)
```

Specific examples of the sheet silicate include talc, pyrophyllite smectite, montmorillonite, beidellite, hectorite, saponite, vermiculite, lepidolite, illite, palagonite, and mica. The above-listed examples may be used alone or in combination. Among the above-listed examples, the sheet silicate is preferably mica because the above-described particle diameter and aspect ratio are easily achieved.

The sheet silicate may be a natural product or synthesized product.

A method for producing a synthesized product of the sheet silicate is not particularly limited, and may be appropriately selected according to the intended purpose. Examples of the method include a melting method, an intercalation method, and a hydrothermal method. Among the above-listed examples, a single kind of the sheet silicate may be used alone, or two or more kinds of the sheet silicates having mutually different minerals, places of production, production methods, particle diameters, etc. may be used in combination.

<<Other components>>

The above-mentioned other components in the polylactic acid resin composition are not particularly limited, as long as the effects obtainable by the present disclosure are not adversely affected, and may be appropriately selected according to the intended purpose. Examples of the above-mentioned other components include chain extenders (crosslinking agents), foam nucleating agents other than the sheet silicate, a resin component other than the polylactic acid resin, and various additives. The above-listed examples may be used alone or in combination.

-Chain extender (crosslinking agent)-

The chain extender (crosslinking agent) is preferably added to the polylactic acid resin composition to adjust a viscosity of the polylactic acid resin to a range of the viscosity suitable for foaming. Moreover, the chain extender (crosslinking agent) also has an effect of improving thermal resistance and hydrolysis resistance of the polylactic acid resin composition or foam sheet.

The chain extender (crosslinking agent) is not particularly limited, and may be appropriately selected according to the intended purpose. For example, peroxides or compounds reactive with a hydroxyl group and/or carboxylic acid group may be used as the chain extender (crosslinking agent). Among the above-listed examples, the chain extender (crosslinking agent) is preferably a compound reactive with a hydroxyl group and/or carboxylic acid group of the polylactic acid resin because the above-described compound does not adversely affect crystallinity of the polylactic acid resin, or improves crystallinity after the reaction with the polylactic acid resin.

The compound reactive with a hydroxyl group and/or carboxylic acid group of the polylactic acid resin is not particularly limited, and may be appropriately selected according to the intended purpose. The compound reactive with a hydroxyl group and/or carboxylic acid group of the polylactic acid resin is preferably an epoxy group-containing compound, an isocyanate group-containing compound, or a carbodiimide group-containing compound. The above-listed examples may be used alone or in combination.

The compound reactive with a hydroxyl group and/or carboxylic acid group of the polylactic acid resin is preferably a compound that includes two or more reactive groups per molecule, more preferably an epoxy group-containing compound that includes two or more epoxy groups per molecule or an isocyanate group-containing compound that includes two isocyanate groups per molecule, because a branched chain structure can be imparted to the polylactic acid resin to efficiently improve the viscosity of the polylactic acid resin composition and an amount of free and unreacted molecules of the chain extender (crosslinking agent) can be reduced. In view of processability or safety, an epoxy group-containing compound that includes two or more epoxy groups per molecule is yet more preferred. In view of reactivity, processability, and safety, an epoxy functional (meth)acrylstyrene-based chain extender that includes two or more epoxy groups per molecule is particularly preferred. Among the above-listed examples, an epoxy functional (meth)acryl-styrene-based chain extender that includes two or more epoxy groups per molecule is the most preferred in view of reactivity, processability, and safety.

--Epoxy group-containing compound--

The epoxy group-containing compound that includes 2 or more epoxy groups per molecule serving as the chain extender (crosslinking agent) is a compound obtained by copolymerizing at least an epoxy group-containing (meth)acryl monomer.

The epoxy group-containing (meth)acryl monomer is not particularly limited, and may be appropriately selected according to the intended purpose. Examples of the epoxy group-containing (meth)acryl monomer include 1,2-epoxy group-containing monomers, such as glycidyl acrylate, and glycidyl methacrylate. The above-listed examples may be used alone or in combination.

The epoxy group-containing compound that includes two or more epoxy groups per molecule may include, as a constituent component of the copolymer, (meth)acryl monomers that do not include an epoxy group, as well as the above-listed monomer. The (meth)acrylic monomer that does not include an epoxy group is not particularly limited, and may be appropriately selected according to the intended purpose. Examples of the (meth)acrylic monomer that does not include an epoxy group include methyl acrylate, ethyl acrylate, propyl acrylate, butyl acrylate, cyclohexyl acrylate, methyl methacrylate, ethyl methacrylate, propyl methacrylate, butyl methacrylate, and cyclohexyl methacrylate. The above-listed examples may be used alone or in combination.

The epoxy group-containing compound that includes two or more epoxy groups per molecule may further include, as well as the (meth)acryl monomer that does not include an epoxy group, a double bond group-containing monomer. The double bond group-containing monomer is not particularly limited, and may be appropriately selected according to the intended purpose. Examples of the double bond group-containing monomer include styrene monomers, α-methyl styrene monomers, and vinyl acetate monomers. The above-listed examples may be used alone or in combination. Examples of the styrene monomers include styrene and α-methyl styrene.

The epoxy functional (meth)acryl-styrene-based chain extender that includes two or more epoxy groups per molecule is a compound obtained by copolymerizing at least the epoxy group-containing (meth)acryl monomer and a styrene monomer.

The epoxy group-containing compound may be suitably synthesized for use or appropriately selected from commercial products. Examples of product names of the commercial products of the epoxy group-containing compound include MARPROOF™ G-01100 (available from NOF CORPORATION), MARPROOF™ G-0105SA (available from NOF CORPORATION), MARPROOF™ G-2050M (available from NOF CORPORATION), MARPROOF™ G-0130SP (available from NOF CORPORATION), MARPROOF™ G-0130SF (available from NOF CORPORATION), MARPROOF™ G-0250SP (available from NOF CORPORATION), MARPROOF™ G-0250SF (available from NOF CORPORATION), METABLEN™ P1901 (available from Mitsui Chemicals, Inc.), Joncryl® ADR4368 (available from BASF SE), Joncryl® ADR4370 (available from BASF SE), Joncryl® ADR4468 (available from BASF SE), IGETABOND™ BF-2C (available from SUMITOMO CHEMICAL COMPANY, LIMITED), IGETABOND™ BF-E (available from SUMITOMO CHEMICAL COMPANY, LIMITED), IGETABOND™ BF-2B (available from SUMITOMO CHEMICAL COMPANY, LIMITED), IGETABOND™ BF-7B (available from SUMITOMO CHEMICAL COMPANY, LIMITED), IGETABOND™ BF-7M (available from SUMITOMO CHEMICAL COMPANY, LIMITED), CESA-Extend OMAN698493 (available from Clariant), and ARUFON UG-4040 (available from TOAGOSEI CO., LTD.). Among the above-listed examples, in view of thermal insulation properties, biodegradability, and minimization of molding failures, MARPROOF™ G-0250SP (available from NOF CORPORATION), MARPROOF™ G-0250SF (available from NOF CORPORATION), and Joncryl® ADR4468 (available from BASF SE) are preferably used as the commercial products of the epoxy group-containing compound because a high expansion ratio can be achieved with a low concentration of the epoxy group-containing compound under the production conditions of a foam sheet that are unlikely to cause corrugation.

An amount of the epoxy group-containing compound is not particularly limited, and may be appropriately selected according to the intended purpose. The amount of the epoxy group-containing compound is preferably 0.2% by mass or greater and less than 2.0% by mass, more preferably 0.5% by mass or greater and 1.3% by mass or less, and yet more preferably 0.7% by mass or greater and 0.9% by mass or less, relative to a total amount of organic matter of the polylactic acid resin composition. When the amount of the epoxy group-containing compound is 0.2% by mass or greater and less than 2.0% by mass relative to a total amount of organic matter of the polylactic acid resin composition, the amount of the polylactic acid resin in the polylactic acid resin composition is increased by reducing the amount of the epoxy group-containing compound as much as possible to improve biodegradability of the polylactic acid resin composition, as the epoxy group-containing compound is a non-biodegradable material. When the amount of the epoxy group-containing compound is small, however, melt viscosity of the polylactic acid resin composition may be low at the time of melt foaming and an expansion ratio of the polylactic acid resin composition may be insufficient so that thermal insulation properties of a resulting foam sheet may be impaired. As the amount of the epoxy group-containing compound is adjusted to the range of 0.2% by mass or greater and less than 2.0% by mass relative to a total amount of organic matter in the polylactic acid resin composition, both biodegradability and thermal insulation properties are achieved. Use of the epoxy group-containing compound having an appropriate range of the weight average molecular weight (Mw) and an appropriate range of the epoxy equivalent as a chain extender (crosslinking agent) can achieve high thermal insulation properties even with a small amount of the epoxy group-containing compound, thus biodegradability of a resulting foam sheet is improved.

The epoxy equivalent of the epoxy group-containing compound is not particularly limited, and may be appropriately selected according to the intended purpose. The epoxy equivalent of the epoxy group-containing compound is preferably 170 or greater and 350 or less, more preferably 150 or greater and 310 or less, and yet more preferably 250 or greater and 310 or less. The epoxy equivalent of the epoxy group-containing compound affects a distance between crosslinks in a reaction product obtained by reacting the polylactic acid resin with the epoxy group-containing compound. In a case where an amount (mass) of the epoxy group-containing compound used and an amount (mass) of the polylactic acid resin used are the same, as the epoxy equivalent of the epoxy group-containing compound is smaller, the number of epoxy groups per molecule of the epoxy group-containing compound increases to reduce the distance between crosslinks in the reaction product of polylactic acid resin and the epoxy group-containing compound; as the epoxy equivalent of the epoxy group-containing compound increases, the number of epoxy groups per molecule of the epoxy group-containing compound decreases to increase the distance between crosslinks in the reaction product of the polylactic acid resin and the epoxy group-containing compound. When the distance between the crosslinks in the reaction product of the polylactic acid resin and the epoxy group-containing compound is very short, many crosslink structures may be formed in parts of the reaction product of the polylactic acid resin and the epoxy group-containing compound so that melt viscosity of the polylactic acid resin composition may become uneven and an expansion ratio is not increased. When the distance between the crosslinks in the reaction product of the polylactic acid resin and the epoxy group-containing compound is very long, an effect of improving melt viscosity of the polylactic acid resin composition is minimized so that an expansion ratio is similarly not increased. When the epoxy equivalent of the epoxy group-containing compound is 170 or greater and 350 or less, the viscosity of the polylactic acid resin composition may be efficiently adjusted to a range of the viscosity suitable for foaming with a small amount of the chain extender (crosslinking agent).

A method for measuring the epoxy equivalent of the epoxy group-containing compound is not particularly limited. The epoxy equivalent of the epoxy group-containing compound can be determined by titration performed according to JIS K 7236:2001 (Determination of epoxy equivalent in epoxy resins).

Specifically, 10 mL of chloroform is added to the epoxy group-containing compound (from 0.1 g to 0.3 g), and the resulting mixture is stirred with a magnetic stirrer etc., to completely dissolve the epoxy group-containing compound. To the resulting solution, 20 mL of acetic acid and 10 mL of a chloroform solution of tetraethylammonium bromide (concentration: 0.25 g/mL) are added to prepare a sample. The sample prepared in the above-described manner is used to measure an epoxy equivalent by the following measuring device under the following measuring conditions.

[[Measuring device and measuring conditions]]

Device: automatic titrator COM-A-19 (available from HIRANUMA Co., Ltd.)
Reference liquid: 0.1 mol/L perchloric acid-acetic acid reference liquid
Electrode: glass electrode GTRS10B
reference electrode GTPH1B (inner liquid: saturated sodium perchlorate/acetic acid solution)
Measuring mode: inflection point detection
Derivative value: 100 mV/mL
Calculation formula: $1{,}000 \times S/((A1\text{-}BL) \times M \times f)$

In the formula above, S is a mass (g) of the epoxy group-containing compound, A1 is the titration amount (mL) at the inflection point, BL is a result (mL) of a blank test, M is a concentration (mol/L) of the reference liquid, f is a factor of the reference liquid. The blank test is performed twice, and an average value from the two measurements is used as the result of the blank test.

A weight average molecular weight (Mw) of the epoxy group-containing compound is not particularly limited, and may be appropriately selected according to the intended purpose. The weight average molecular weight (Mw) of the epoxy group-containing compound is preferably 10,000 or greater and 20,000 or less, more preferably 12,500 or greater and 17,500 or less. The weight average molecular weight (Mw) of the epoxy group-containing compound affects the number of crosslink points in the reaction product of the polylactic acid resin and the epoxy group-containing compound. Although it also depends on the number of epoxy groups per molecule of the epoxy group-containing compound, in the case where the number of epoxy groups per molecule of the epoxy group-containing compound is the same and an amount (mass) of the epoxy group-containing compound added and an amount (mass) of the polylactic acid resin added are the same, the number of crosslink points in the reaction product of the polylactic acid resin and the epoxy group-containing compound is smaller, as the weight average molecular weight (Mw) of the epoxy group-containing compound is smaller, and the number of crosslink points in the reaction product of the polylactic acid resin and the epoxy group-containing compound is larger, as the weight average molecular weight (Mw) of the epoxy group-containing compound is larger. As the number of crosslink points in the reaction product of the polylactic acid resin and the epoxy group-containing compound is larger, molecular chains of the reaction product of the polylactic acid resin and the epoxy group-containing compound are more likely to tangle with one another to increase a melt viscosity of the polylactic acid resin composition at the time of melt foaming so that an expansion ratio is increased, leading to improvement in thermal insulation properties. When the weight average molecular weight (Mw) of the epoxy group-containing compound is very large, however, flowability of the polylactic acid resin composition is lost at a temperature below a reaction temperature of the epoxy group-containing compound to reduce reactivity between the polylactic acid resin and the epoxy group-containing compound. As a result, a melt viscosity of the polylactic acid resin composition is not increased and an expansion ratio is also not increased. For the above-described reasons, the weight average molecular weight of the epoxy group-containing compound is set to the range of 10,000 or greater and 20,000 or less so that a melt viscosity of the polylactic acid resin composition is increased, and an expansion ratio is increased to improve thermal insulation properties of a resulting foam sheet.

The weight average molecular weight (Mw) of the epoxy group-containing compound can be measured by GPC. The weight average molecular weight (Mw) of the epoxy group-containing compound is calculated using calibration curves prepared by polystyrene samples whose weight average molecular weights are known (for example, A-500 (weight average molecular weight: 589), A-1000 (weight average molecular weight: 1,010), A-2500 (weight average molecular weight: 312), A-5000 (weight average molecular weight: 5,430), F-1 (weight average molecular weight: 9,490), F-2 (weight average molecular weight: 15,700), F-4 (weight average molecular weight: 37,200), F-10 (weight average molecular weight: 98,900), F-20 (weight average molecular weight: 189,000), F-40 (weight average molecular weight: 397,000), F-80 (weight average molecular weight: 707,000), and F-128 (weight average molecular weight: 1,110,000), available from Tosoh Corporation) as the standards.

A sample provided for the GPC is prepared in the following manner. The epoxy group-containing compound and chloroform are mixed so that a concentration of the epoxy group-containing compound is approximately 2 mg/mL. The resulting mixture is shaken by a table top shaker (for example, MSI-60 available from AS ONE Corporation) for about half a day. After confirming that the epoxy group-containing compound is dissolved, the resulting solution is filtered with a 0.45 μm-membrane filter to collect a filtrate, and the collected filtrate is used as a sample. In the case where the epoxy group-containing compound is not easily dissolved, the mixture of the epoxy group-containing compound and chloroform is heated at a temperature equal to or lower than the boiling point of chloroform to dissolve the epoxy group-containing compound. A measuring device and measuring conditions of the above-described GPC are not particularly limited. For example, the sample prepared in the above-described manner is measured by the same measuring device under the same measuring conditions as in the measurement of the weight average molecular weight (Mw) of the foam sheet.

-Isocyanate group-containing compound-

The isocyanate group-containing compound that includes two or more isocyanate groups per molecule and serves as the chain extender (crosslinking agent) is not particularly limited, and may be appropriately selected according to the intended purpose. Examples of the isocyanate group-containing compound serving as the chain extender (crosslinking agent) include aliphatic diisocyanate compounds, alicyclic polyisocyanate compounds, aromatic diisocyanate compounds, triisocyanate compounds, and modified polyisocyanate compounds. The above-listed examples may be used alone or in combination.

Examples of the aliphatic diisocyanate compounds include 1,6-hexamethylenediisocyanate, 3-isocyanatomethyl-3,5,5-trimethylcyclohexylisocyanate (isophorone diisocyanate), 1,4-tetramethylenediisocyanate, 2,4,4-trimethylhexamethylene diisocyanate, 2,2,4-trimethylhexamethylene diisocyanate, dicyclohexylmethane-4,4'-diisocyanate, methylcyclohexyl-2,4-diisocyanate, methylcyclohexyl-2,6-diisocyanate, xylylene diisocyanate, 1,3-bis(isocyanate)methylcyclohexane, tetramethylxylylene diisocyanate, trans-1,4-cyclohexane diisocyanate, and lysine diisocyanate.

Examples of the alicyclic polyisocyanate compounds include isophorone diisocyanate, hydrogenated diphenylmethane diisocyanate, hydrogenated tolylene diisocyanate, hydrogenated xylylene diisocyanate, hydrogenated tetramethylxylylene diisocyanate, and cyclohexane diisocyanate.

Examples of the aromatic diisocyanate compounds include 2,4-tolylene diisocyanate, 2,6-tolylene diisocyanate, diphenylmethane-4,4'-isocyanate, 1,5'-naphthene diisocyanate, tolidine diisocyanate, diphenylmethylmethane diisocyanate, tetraalkyldiphenylmethane diisocyanate, 4,4'-dibenzyldiisocyanate, and 1,3-phenylenediisocyanate.

Examples of the triisocyanate compounds include lysine ester triisocyanate, triphenylmethane triisocyanate, 1,6,11-undecanetriisocyanate, 1,8-isocyanate-4,4-isocyanatemethyloctane, 1,3,6-hexamethylenetriisocyanate, bicycloheptane triisocyanate, adducts between trimethylolpropane and 2,4-toluene diisocyanate, and adducts between trimethylolpropane and diisocyanate (e.g., 1,6-hexamethylene diisocyanate).

Examples of the modified polyisocyanate includes compounds each obtained by reacting a multivalent alcohol (e.g., glycerin and pentaerythritol) with the aliphatic diisocyanate compound, the aromatic diisocyanate compound, and/or the triisocyanate compound.

An amount of the chain extender (crosslinking agent) in the polylactic acid resin composition varies according to a molecular weight or molecular weight distribution of the polylactic acid resin used. In the case where a weight average molecular weight of the polylactic acid resin is small or the polylactic acid resin includes a large amount of a low molecular weight component, for example, a large amount of the chain extender (crosslinking agent) tends to be used to adjust a viscosity of the polylactic acid resin composition to suit foaming. As the amount of the chain extender (crosslinking agent) increases, however, biodegradability is likely to be lowered, and use of the chain extender (crosslinking agent) in a large amount is not preferred in view of contribution to the sustainable society because the chain extender (crosslinking agent) is generally a petroleum-derived compound.

An amount of the chain extender other than the epoxy group-containing compound in the polylactic acid resin composition is not particularly limited, and may be appropriately selected according to the intended purpose. A sum of the amount of the epoxy group-containing compound and the amount of the chain extender other than the epoxy group-containing compound is preferably less than 2% by mass relative to a total amount of organic matter of the polylactic acid resin composition.

Examples of a method for adjusting the viscosity, other than the adjustment made by adding the chain extender (crosslinking agent), include: a method where electron beams etc., are applied to the polylactic acid resin composition to crosslink the polylactic acid resin composition; and a method where the polylactic acid resin composition is blended with another resin composition having a high melt strength or a small amount of a high molecular weight component.

-Foam nucleating agent other than sheet silicate-

The polylactic acid resin composition may further include a foam nucleating agent other than the sheet silicate, as necessary, except that physical properties of a foam sheet are not impaired. Examples of the foam nucleating agent other than the sheet silicate include organic nucleating agents and inorganic nucleating agents. The above-listed examples may be used alone or in combination.

--Inorganic nucleating agent other than sheet silicate--

The inorganic nucleating agent may be added as a foam nucleating agent to adjust diameters of air bubbles, or as a reinforcer to improve mechanical properties of a foam sheet, or as a crystal nucleating agent to improve a crystallization speed, or to adjust appearance (color tone) of a foam sheet.

The inorganic nucleating agent other than the sheet silicate may be used as inorganic particles other than the sheet silicate in the polylactic acid resin composition.

The foam nucleating agent other than the sheet silicate is not particularly limited, and may be appropriately selected according to the intended purpose. Examples of the foam nucleating agent other than the sheet silicate include kaolin, calcium carbonate, zinc carbonate, wollastonite, silica, alumina, magnesium oxide, calcium silicate, sodium aluminate, calcium aluminate, sodium aluminosilicate, magnesium silicate, glass balloons, carbon black, zinc oxide, antimony trioxide, zeolite, hydrotalcite, metal fibers, metal whiskers, ceramic whiskers, potassium titanate, boron nitride, graphite, glass fibers, and carbon fibers. The above-listed examples may be used alone or in combination.

The average hydrophobicity and carbon content of the inorganic nucleating agent are not particularly limited, and may be appropriately selected according to the intended purpose. The average hydrophobicity is preferably 65% by volume or greater. The carbon content is preferably 4% by mass or greater. When the average hydrophobicity and carbon content of the inorganic nucleating agent are within the above-mentioned preferred ranges, in the case where a non-polar blowing agent, such as carbon dioxide and nitrogen, is used, hydrophobic surfaces of the inorganic particles suitably function as an area for forming foaming nuclei to efficiently form foaming nuclei. The upper limit of the average hydrophobicity of the inorganic nucleating agent and the upper limit of the carbon content of the inorganic nucleating agent are not particularly limited. The upper limit of the average hydrophobicity is preferably 68% by volume or less. The upper limit of the carbon content is preferably 8.9% by mass or less. When the average hydrophobicity of the inorganic nucleating agent is within the above-mentioned preferred range, aggregation of the inorganic particles may be minimized. However, the degree of the aggregation largely depends on kneading conditions and a kneader used. Therefore, the effect of the present disclosure may be limited by the above-mentioned preferred range. When the carbon content of the inorganic nucleating agent is within the above-mentioned preferred range, an amount of free molecular components derived from a surface treatment agent detached from the inorganic particles can be reduced.

According to the classical nucleation theory, as a contact angle between an air bubble nucleus and a surface of an inorganic particle decreases, activation energy for formation of foaming nuclei decreases to smoothly carry out nucleation. Therefore, it seems that only hydrophobicity is important as chemical characteristics of the surface of the inorganic particle. As a result of the research conducted by the present inventors, however, the inorganic nucleating agent that is inorganic particles having only high hydrophobicity may not be adequately effective as a foam nucleating agent. Specific reasons are not clear, but it has been found that a significant effect as a foam nucleating agent is obtained when inorganic particles serving as the inorganic nucleating agent have average hydrophobicity of 65% by volume or greater, and a carbon content of 4% by mass or greater. It is assumed that, when the carbon content of the inorganic particles is 4% by mass or greater, a surface layer of each of the inorganic particles has a certain volume of the portion having high affinity to a blowing agent.

In the case where a concentration of the blowing agent is low, as in the present disclosure, diffusion of the blowing agent seems to be a factor for limiting nucleation. It is assumed that a concentration of the blowing agent is substantially higher in the certain volume of the portion having high affinity to the blowing agent than other positions within the surface layer of each of the inorganic particles, and the certain volume of the portion of the surface layer having high affinity to the blowing agent effectively acts to secure the blowing agent at the time of nucleation for foaming.

The hydrophobicity of the inorganic particles may be determined by the methanol wettability (MW) test. The larger the value of the hydrophobicity is, the higher the hydrophobicity is. The smaller the value of the hydrophobicity is, the higher the hydrophilicity is.

The hydrophobicity of the inorganic particles can be determined according to the following equation (10). V1 [mL] is an amount of pure water to which the inorganic particles are added. Methanol is added to the mixture of the pure water and the inorganic particles by dripping while stirring the mixture. V2 [mL] is an amount of the methanol used to wet the inorganic particles to disperse the inorganic particles in the mixed liquid.

$$\text{Hydrophobicity [\% by volume]} = \{V2/(V1 + V2)\} \times 100$$
$$\text{Equation (10)}$$

In the present specification, the hydrophobicity is a value obtained by the following measuring method.

The inorganic particles are weighed by 50 mg in a 50 mL screw tube (LABORUN screw tube bottle 9-852-09, No. 7, available from LABORUN TECH), and 5 mL (V1 [mL]) of pure water is added to prepare a sample. A stir bar (diameter: 6 mm, length: 20 mm, oval shape) is gently added into the sample, and the sample is gently stirred by a magnetic stirrer (MX-1, available from SHIBATA SCIENTIFIC TECHNOLOGY LTD.) in a manner that a vortex is not generated in the water surface. The opening of the tube is covered with PARAFILM in which a hole is made, and methanol (guaranteed reagent, >99.8%, available from KANTO CHEMICAL CO., INC.) is added at the feeding rate of 0.3 mL/min by a 25 mL burette (tolerance: ±0.03 mL, available from AS ONE Corporation) in a manner that the methanol falls along the wall surface of the tube. An amount (V2 [mL]) of the methanol fed until the inorganic particles are dispersed within the sample mixture liquid is measured. The measurement is performed three times and hydrophobicity is calculated according to the equation (10). The arithmetic mean of the calculated values of the hydrophobicity is calculated and determined as average hydrophobicity.

Moreover, the carbon content of the inorganic particles can be measured by the following measuring method according to ISO 3262-20:2021.

After completely burning the inorganic particles at 800°C, carbon dioxide in the combustion gas component is detected and quantified by thermal conductivity detector (TCD) gas chromatography to calculate the carbon content of the inorganic particles.

--Organic foam nucleating agent--

Examples of the organic foam nucleating agent include polymers preset in nature (e.g., starch, cellulose nanofibers, cellulose particles, wood meal, soy pulps, rice husks, and bran) and modified products of the polymers, glycerin compounds, sorbitol compounds, benzoic acids and metal salts of benzoic acids, phosphoric acid ester metal salts, and rosin compounds. The above-listed examples may be used alone or in combination.

An amount of the foam nucleating agent other than the sheet silicate in the polylactic acid resin composition is not particularly limited, as long as the effects obtainable by the present disclosure are not adversely affected. The amount of the foam nucleating agent other than the sheet silicate may be appropriately selected according to the intended purpose. The amount of the foam nucleating agent other than the sheet silicate is less than 2% by mass relative to a total amount of organic matter of the polylactic acid resin composition. When the amount of the foam nucleating agent other than the sheet silicate in the polylactic acid resin composition is less than 2% by mass, desirable biodegradability and recyclability are achieved.

-Resin component other than polylactic acid resin-

The resin component other than the polylactic acid resin is not particularly limited, and may be appropriately selected according to the intended purpose. Examples of the resin component include urethane resins, polyester resins, acrylic resins, vinyl acetate-based resins, styrene-based resins, butadiene-based resins, styrene-butadiene-based resins, vinyl chloride-based resins, acrylic styrene-based resins, acrylic silicone-based resins. The above-listed examples may be used alone or in combination.

An amount of the resin component other than the polylactic acid resin in the polylactic acid resin composition is not particularly limited, as long as the effects obtainable by the present disclosure are not adversely affected. The amount of the resin component other than the polylactic acid resin may be appropriately selected according to the intended purpose. The amount of the resin component other than the polylactic acid resin is preferably less than 2% by mass relative to a total amount of organic matter of the polylactic acid resin composition. When the amount of the resin component other than the polylactic acid resin is less than 2% by mass, desirable biodegradability and recyclability are achieved.

-Additives-

The additives are not particularly limited, and may be appropriately selected according to the intended purpose. Examples of the additives include thermal stabilizers, antioxidants, plasticizers, lubricants, crystallization accelerators, and tackifiers. The above-listed examples may be used alone or in combination.

An amount of the above-mentioned other components in the polylactic acid resin composition is not particularly limited, and may be appropriately selected according to the intended purpose. The amount of the above-mentioned other components is preferably less than 2% by mass relative to a total amount of organic matter of the polylactic acid resin composition. When the amount of the above-mentioned other components is within the above-mentioned range, suitable biodegradability and recyclability are achieved.

Note that, an amount of each component in the polylactic acid resin composition also encompasses an amount of each component in the foam sheet produced by foaming the polylactic acid resin composition.

As described above, the foam sheet of the present disclosure has characteristics such that the polylactic acid resin composition having high crystallinity is formed into a foam sheet with a low degree of crystallization to obtain a foam sheet having excellent thermoformability. In order to achieve the above-described characteristics, the temperature of the polylactic acid composition from kneading to extruding of the polylactic acid resin composition is maintained at a relatively high temperature, which is equal to or higher than a temperature [Tm-20°C] that is lower than the melting point (Tm) of the polylactic acid resin composition by 20°C. In the above-mentioned temperature range, it is generally difficult to adjust a viscosity of a polylactic acid resin composition to a viscosity range suitable for foaming through cooling of the polylactic acid resin, as disclosed in the related art. Therefore, the polylactic acid resin composition of the present disclosure has a high melt viscosity so that the blowing agent can be retained at a relatively high temperature, which is equal to or higher than the temperature [Tm-20°C] that is lower than the melting point (Tm) of the polylactic acid resin composition by 20°C.

The foam sheet of the present disclosure may be used as it is, or may be molded and used as a molded product (an article). Since the foam sheet of the present disclosure has excellent thermal resistance, thermal insulation properties, strength and biodegradability, the foam sheet is suitably used as food containers, or dishes. Moreover, the foam sheet is suitable for heat-resistant food containers, but use of the foam sheet is not particularly limited to the heat-resistant food containers. Moreover, printing may be carried out directly on the foam sheet of the present disclosure to use the printed foam sheet.

(Method for producing foam sheet)

The foam sheet of the present disclosure can be obtained by extruding and foaming the polylactic acid resin composition.

The method for producing the foam sheet of the present disclosure includes kneading of the polylactic acid resin and the inorganic particles to prepare the polylactic acid resin composition, kneading of the polylactic acid resin composition with a blowing agent to prepare a foamable polylactic acid resin composition, and passing of foamable polylactic acid resin composition through a channel of a die to extrude the foamable polylactic acid resin composition and vaporize the blowing agent to foam the polylactic acid resin composition.

The method for producing the foam sheet of the present disclosure will be more specifically described hereinafter.

The method for producing the foam sheet of the present disclosure preferably includes at least a kneading step, an impregnation step, and a foaming step. The method may further include other steps, as necessary.

As the extruder used for the extrusion foaming, for example, a single-screw extruder, a twin-screw extruder, or a tandem extruder combining any of the foregoing extruders may be used. Among the above-listed examples, a tandem extruder is preferably used because constituent materials of a foam sheet, such as the polylactic acid resin and the inorganic particles, and optionally the chain extender, the foam nucleating agent, the above-mentioned other components, and a blowing agent, are effectively melt kneaded, and the melt-kneaded product can be cooled to the predetermined temperature and extruded. In view of efficiency of melt kneading and cooling, a tandem extruder including a combination of a twin-screw extruder and a single-screw extruder is most preferred.

In the case where a foam sheet having a low bulk density is formed, a foam sheet is preferably produced using a circular die because corrugation may be minimized. In this case, a cylindrical foam body extruded from the circular die is preferably placed around a cooled mandrel to cool the foam body, and air is blown onto the outer circumference of the foam body to rapidly cool the foam body. Since the cooling is performed in the above-described manner, crystallization after the extrusion of the foam body can be minimized so that a foam sheet having excellent thermoforming properties can be obtained.

Moreover, a flow-rate regulator, such as a gear pump, may be disposed between the twin-screw extruder and the single-screw extruder, or between the extruder and the die, as necessary.

<<Blowing agent>>

The foam sheet can be obtained by, preferably after melt-kneading the polylactic acid resin composition and a blowing agent, extruding and forming the resulting mixture. As the blowing agent, any physical blowing agent available in the related art may be used.

Examples of the physical blowing agent include: hydrocarbons, such as ethane, butane, pentane, hexane, heptane, ethylene, propylene, and petroleum ethers; halogen-based blowing agents, such as methyl chloride, monochlorotrifluoromethane, dichlorodifluoromethane, and dichlorotetrafluoroethane; air; carbon dioxide; and nitrogen.

In view of a low impact to the environment, excellent safety during processing, and easiness of handling, the blowing agent is preferably carbon dioxide or nitrogen. Carbon dioxide is more preferred compared to nitrogen in view of solubility in the polylactic acid resin composition.

However, it is also known that carbon dioxide has the higher vapor pressure than a hydrocarbon-based blowing agent, and the diffusion speed of the carbon dioxide in the polylactic acid resin composition is fast. In the case where carbon dioxide is used as a blowing agent to produce a foam sheet, therefore, foaming occurs rapidly at a high concentration of the blowing agent, at which finely foamed state is achieved. As a result, streaky lines, so-called corrugation, may appear to impair an appearance of a resulting foam sheet, a surface of the foam sheet may become rough due to breakage of air bubbles, or an expansion ratio may be reduced.

In the case where a tandem extruder is used, the blowing agent is preferably fed to the extruder of the first stage. As the blowing agent is fed to the extruder of the first stage, the blowing agent is allowed to be in contact with the polylactic acid resin composition for a long period. Therefore, problems associated with swelling of the blowing agent residue remaining without being dissolved, such as partial enlargement of air bubbles or formation of pinholes, may be minimized.

An amount of the blowing agent added relative to 100 parts by mass of the polylactic acid resin composition is not particularly limited, and may be appropriately selected according to the intended purpose. The amount of the blowing agent is preferably 2 parts by mass or greater and 5 parts by mass or less, more preferably 2 parts by mass or greater and 4 parts by mass or less. When the amount of the blowing agent is 2 parts by mass or greater relative to 100 parts by mass of the polylactic acid resin composition, plasticization of the polylactic acid resin composition may be sufficient, and an expansion ratio can be desirably increased. When the amount of the blowing agent is 5 parts by mass or less relative to 100 parts by mass of the polylactic acid resin composition, the polylactic acid resin composition desirably foams to achieve a desired surface texture of a resulting foam sheet.

<Kneading step>

The kneading step includes melting and kneading of the mixture including the polylactic acid resin and the inorganic particles, and optionally the chain extender, and the above-mentioned other component to obtain a polylactic acid resin composition having a viscosity suitable for foaming. The kneading step preferably includes the melting and the kneading of the mixture using a compressible fluid. The compressible fluid is added for the purpose of plasticizing the polylactic acid resin composition to reduce the load applied to a device. In view of omission of the following impregnation step, the compressible fluid is preferably identical to the blowing agent.

In the case where the chain extender is added to the polylactic acid resin, the polylactic acid resin and the chain extender are reacted to adjust the viscosity of the polylactic acid resin composition in the kneading step.

As the chain extender, the compound including two or more epoxy groups per molecule is suitably used. Therefore, a temperature of the kneading step is preferably equal to a melting point of the polylactic acid resin composition or higher and 240°C or lower, more preferably 220°C or higher and 240°C or lower. When the temperature of the kneading step is equal to a melting point of the polylactic acid resin composition or higher and 240°C or lower, the viscosity of the polylactic acid resin composition is effectively improved, and elution of the unreacted epoxy group-containing compound including two or more epoxy groups per molecule can be reduced.

<Impregnation step>

The impregnation step includes kneading the polylactic acid resin composition with a blowing agent to prepare a foamable polylactic acid resin composition. The solubility (solubility rate) of the blowing agent in the polylactic acid resin composition may vary depending on a temperature and pressure for the impregnation step. The temperature and pressure for the impregnation step may be appropriately set while closely monitoring the state of the foam sheet. The solubility of the blowing agent in the polylactic acid resin composition is generally increased by increasing the pressure, or lowering the temperature of the polylactic acid resin composition.

In the present disclosure, the term "foamable polylactic acid resin composition" encompasses a composition in which the blowing agent is dissolved and/or dispersed in the polylactic acid resin composition, and is a composition that will be foamed as the pressure is released from the pressure inside the extruder to the atmospheric pressure in the below-described foaming step.

The impregnation step is preferably carried out, while gently cooling the foamable polylactic acid resin composition. A tandem extruder combining a twin-screw extruder and a single-screw extruder enables to dissolve the blowing agent, while gently cooling the polylactic acid resin composition by the single-screw extruder. Therefore, the tandem extruder is suitable for the production of the foam sheet of the present disclosure.

<Foaming step>

The foaming step includes passing the foamable polylactic acid resin composition obtained in the impregnation step through a channel of the die to extrude and eject the foamed polylactic acid resin composition to obtain a foamed body. The foaming step preferably includes vaporizing and removing the compressible fluid serving as the blowing agent, which has been dissolved in the foamable polylactic acid resin composition obtained in the impregnation step, to generate air bubbles in the polylactic acid resin composition to foam the polylactic acid resin composition, and passing the polylactic acid resin composition through the channel of the die to extrude and mold the polylactic acid resin composition. In the foaming step, the pressure difference between the pressure inside the extruder and the atmospheric pressure acts as a driving force for foaming.

The temperature of the foamable polylactic acid resin composition in the foaming step is preferably adjusted to the range of approximately 150°C to approximately 170°C. The temperature of the foaming step is a temperature of the die. As the temperature of the foaming step is adjusted to the above-mentioned range, the viscosity of the foamable polylactic acid resin composition can be adjusted to the range suitable for foaming, while suppressing crystallization.

When the die is cooled to approximately 130°C, crystallization progresses, which may impair thermoforming of the foam sheet, or the die may be blocked with crystals. Since the temperature of the foaming step is adjusted to the above-mentioned range, the viscosity of the foamable polylactic acid resin composition can be adjusted to suit foaming, while suppressing crystallization.

The kneading step and the impregnation step may be performed at the same time. Alternatively, only the kneading step is performed to obtain a polylactic acid resin composition, followed by performing the impregnation step and the foaming step to obtain a foam body.

The non-foamable polylactic acid resin composition obtained by performing only the kneading step may be referred to as a master batch or simply a polylactic acid resin composition.

The die is preferably disposed at an edge of an outlet of the extruder as the foamer.

The die is not particularly limited, and may be appropriately selected according to the intended purpose. For example, a cyclic die called a circular die (may be referred to as a "round die"), or T-die may be used. The die is connected at the edge of the extruder, and the foamable polylactic acid resin composition is extruded from the die to obtain a foam sheet. Among the above-listed examples, a circular die is preferred in view of a bulk density of the foam sheet.

The die has a channel inside, and preferably includes a first channel forming member and a second channel forming member, which form at least a cylindrical channel. As the foamable polylactic resin composition is passed through the channel inside the die having the first channel forming member and the second channel forming member, i.e., a region sandwiched between the channel forming surface of the first channel forming member and the channel forming surface of the second channel forming member, the polylactic acid resin composition is foamed and molded.

A surface roughness parameter Rk of at least one of the channel forming surface of the first channel forming member and the channel forming surface of the second channel forming member (may be simply referred to as a "surface roughness parameter Rk" hereinafter) is not particularly limited, and may be appropriately selected according to the intended purpose. The surface roughness parameter Rk is preferably 1.0 $\mu$m or greater and 6.3 $\mu$m or less, more preferably 2.0 $\mu$m or greater and 5.0 $\mu$m or less. When the surface roughness parameter Rk is 1.0 $\mu$m or greater and 6.3 $\mu$m or less and the polylactic acid resin composition includes the sheet silicate, the aligned sheet silicate grains reduce friction between the foamable polylactic acid resin composition and at least one of the channel forming surface of the first channel forming member and the channel forming surface of the second channel forming member so that a resulting foam sheet has uniform density and strength of the foam sheet is further improved. When the surface roughness parameter Rk is less than 1.0 $\mu$m, a resulting foam sheet has an uneven density due to the stick-slip phenomenon so that the part of the foam sheet having a low density becomes weak to impair the strength of the foam sheet. When the surface roughness parameter Rk is greater than 6.3 um, an appearance of a resulting foam sheet may be impaired, as the shape of the die is transferred.

The surface roughness parameter Rk is an index for a height of the entire profile of the surface cross section of the foam sheet excluding the significantly projected peaks and the significantly recessed valleys, and is the parameter according to JIS B0671-2:2002 (Geometrical Product Specification (GPS)-Surface texture).

The surface roughness parameter $Rk_1$ of the channel forming surface of the first channel forming member and the surface roughness parameter $Rk_2$ of the channel forming surface of the second channel forming member may be the same or different. The surface roughness parameter $Rk_1$ and the surface roughness parameter $Rk_2$ are preferably both 1.0 µm or greater and 6.3 µm or less. More preferably, the surface roughness parameter $Rk_1$ and the surface roughness parameter $Rk_2$ are the same value.

A method for measuring the surface roughness parameter Rk is not particularly limited. For example, the surface roughness parameter Rk can be measured by a portable roughness meter (e.g., 3D laser scanning microscope VK-X250 available from KEYENCE CORPORATION, and Portable Surface Roughness Measurement Surftest SJ-210 available from Mitutoyo Corporation). Specifically, the surface roughness parameter Rk can be measured by VK-X250 available from KEYENCE CORPORATION under the following measuring conditions, and the conditions for image processing and measurement. The method is not particularly limited to the method and conditions described below, as long as the measurement is performed according to measuring conditions and image processing and measurement corresponding to the following measuring conditions and the following image processing and measurement, there is the correlation between a device used and the following device, and the difference is known in advance.

[Measuring conditions]

Measuring device: VK-X250 available from KEYENCE CORPORATION Brightness: automatic setting
Double scanning (automatic)
Measuring mode: surface profile mode
Resolution: 1024×768
High resolution mode
RPD: no setting
Measuring height pitch: 0.1 µm
Single view (no linkage of images)
Using ×20 objective lens [Image processing and measurement]
Flat plane adjustment: "standard plane adjustment (entire region)"
Curved plane adjustment: "plane undulation adjustment intensity 3"
Removal of node
20 lines are measured in total along a vertical line (as a linear roughness, an average value of the values from 20 points is used, but a surface roughness may be used for the parameter defined with the surface roughness)
Roughness measurement: No cutoff was set for λs and λc, and adjustment of endpoints is performed.
Field of view for measurement: about 536 µm in a direction of a measurement length, and about 714 µm in a direction perpendicular to the measurement length

A method for forming the channel forming surface of the first channel forming member and the channel forming surface of the second channel forming member is not particularly limited, and may be appropriately selected according to the intended purpose. Examples of the method include a method for forming the channel forming surface by sandblasting. However, the method is not limited to sandblasting. For example, the channel forming surface may be formed by electrolysis, chemical etching, or mechanical processing, such as processing with a lathe. In the case where sandblasting is performed with air, it has been known that a degree of surface roughness can be adjusted by adjusting a process time, jet pressure, a distance with a target object, a processing angle, shapes of media, a material of media, etc. The sandblasting is affected by the conditions, such as hardness of an outermost surface of a target object, a structure of the sandblasting system, a degree of deterioration of media, a shape of a nozzle, etc. For example, there is a correlation such that roughness increases as jet pressure increases. Therefore, tests performed on test pieces formed of a material similar to a target object may be repeated to achieve the predetermined roughness.

The temperature of the die, preferably the circular die, is preferably 150°C or higher and 170°C or lower. As the temperature of the die is set within the above-described range, the viscosity of the foamable polylactic acid resin composition can be adjusted to a range of the viscosity suitable for foaming while suppressing crystallization of the foamable polylactic acid resin composition.

Next, one example of a device for carrying out the kneading step will be described with reference to a drawing, but the kneading step according to the present disclosure is not limited to the below-described example.

Fig. 2 is a schematic view illustrating a twin-screw extruder (continuous kneader) 100 as a kneader of the foam sheet production apparatus of the present disclosure. For example, the twin-screw extruder 100 has a screw diameter of 42 mm, and a ratio [L/D] of 48 where L is a length of the extruder, and D is the screw diameter. In the present embodiment, for example, constituent materials, such as a polylactic acid resin, inorganic particles, a foam nucleating agent, and a chain extender, are supplied from a first feeder 1 and a second feeder 2 to a constituent-material mixing and melting section a, and the supplied constituent materials are mixed and melted. In the case where the polylactic acid resin composition includes three or more components, the number of feeders may be appropriately increased, or some of components may be mixed with the polylactic acid resin in advance, followed by supplying the resulting mixture from the feeder to the constituent-material mixing and melting section a.

A compressible fluid is supplied to the mixed and melted constituent materials from a compressible fluid reservoir 3 into a compressible-fluid feeding section b. Subsequently, the mixture including the compressible fluid is kneaded in a kneading section c. The compressible fluid F is removed from the mixture in a compressible-fluid removing section d, and the mixture is, for example, formed into resin pellets P in a mold processing section e. In the manner as described above, a polylactic acid resin composition (master batch) is produced.

As the compressible fluid, for example, a gas that is cooled and liquidized is supplied by a metering pump. Moreover, solid constituent materials, such as the resin pellets and the foam nucleating agent, are supplied, for example, by a constant feeder.

In the case where the kneading step and the impregnation step, and the foaming step are sequentially carried out, the blowing agent is preferably used as the compressible fluid. In this case, the removal of the compressible fluid F is not carried out in the compressible-fluid removing section d.

Next, each process carried out in each section of the kneader illustrated in Fig. 2 will be described.

-Constituent-material mixing and melting section a-

In the constituent-material mixing and melting section a, resin pellets and optional components other than the polylactic acid resin are mixed and heated. The heating temperature is set at a temperature equal to or higher than a melting point of the resin so that the mixture of the constituent materials is turned into a state where the mixture can be homogeneously mixed with a compressible fluid F in the following compressible-fluid feeding section b.

-Compressible-fluid feeding section b-

In the compressible-fluid feeding section b, a compressible fluid F is supplied to the resin pellets that have been heated and turned into the melted state, to plasticize the melted resin.

-Kneading section c-

In the kneading section c, the components other than the polylactic acid resin are homogeneously dispersed in the polylactic acid resin. The set temperature may be changed according to specifications of a reactor or a load. The set temperature is preferably a melting point of the polylactic acid resin composition or higher and 240°C or lower.

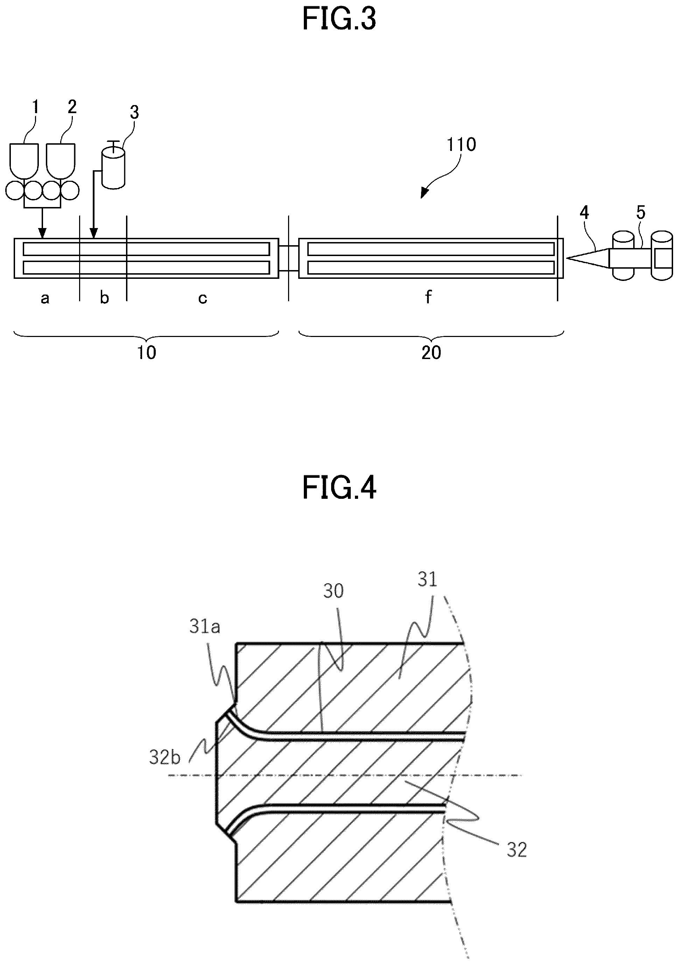

An example of the foam sheet production apparatus (continuous foam sheet production apparatus 110), in which the kneading and the foaming are consecutively performed is illustrated in Fig. 3.

As the continuous foam sheet production apparatus 110, a tandem extruder in which a kneader 10 and a single-screw extruder 20 are linked may be used. In the continuous foam sheet production apparatus 110, for example, constituent materials, such as a polylactic acid resin, inorganic particles, a foam nucleating agent, and a chain extender, are supplied from a first feeder 1 and a second feeder 2 to a constituent-material mixing and melting section a, and the supplied materials are mixed and melted.

In a compressible-fluid feeding section b, a compressible fluid serving as a blowing agent is supplied to the mixed and melted constituent materials from a compressible fluid reservoir 3. Subsequently, the resulting mixture including the compressible fluid as the blowing agent is kneaded in a kneading section c to prepare a foamable polylactic acid resin composition.

The foamable polylactic acid resin composition is supplied to a temperature adjusting section f. In the temperature adjusting section f, the temperature of the foamable polylactic acid resin composition is adjusted to a temperature suitable for foaming, and the blowing agent is further dissolved. Subsequently, the foamable polylactic acid resin composition is extruded from a die into the atmosphere to obtain a cylindrical foam body 4. The obtained cylindrical foam body 4 is placed around a cooling mandrel 5 and air is blown onto the outer circumference of the cylindrical foam body 4 to cool the cylindrical foam body 4. Part of the foam body 4 is cut open by a rotary blade to flatten the foam body, and the cut-open foam body is rolled up as a roll to thereby obtain a foam sheet of the present disclosure.

In the present disclosure, the temperature of the kneading section c is preferably equal to or higher than the melting point of the polylactic acid resin composition and 240°C or lower, more preferably 220°C or higher and 240°C or lower. Moreover, the temperature of the temperature adjusting section f is preferably equal to or higher than a temperature [Tm-20°C] that is lower than the melting point (Tm) of the polylactic acid resin composition by 20°C.

As illustrated in Fig. 4, the die disposed at the edge of the outlet of the single-screw extruder 20 includes at least a first channel forming member 31 and a second channel forming member 32, which form at least cylindrical channel 30. The foamable polylactic acid resin composition is passed through the channel 30 to mold the foamable polylactic acid resin composition. As the foamable polylactic acid resin composition is passed through the channel 30, a resulting foam sheet has a uniform density to improve strength of the foam sheet because the surface roughness parameter Rk of at least one of the channel forming surface 31a of the first channel forming member 31 and the channel forming surface 32a of the second channel forming member 32 is 1.0 $\mu$m or greater and 6.3 $\mu$m or less.

In the above-described example, the kneading step is performed by the kneader 10, and the foaming step is performed by the single-screw extruder 20. However, the present disclosure is not limited to the above-described structure. For example, a section where the kneading step is carried out and a section where the foaming step is carried out may be appropriately changed.

(Molded product)

One embodiment of the molded product of the present disclosure includes the foam sheet of the present disclosure. The molded product may be a molded product of the foam sheet of the present disclosure. The molded product may further include other components, as necessary.

Another embodiment of the molded product of the present disclosure is a molded product obtained by thermoforming the foam sheet of the present disclosure. Specifically, the molded product is the foam sheet of the present disclosure having a shape achieved by thermoforming. The molded product may further include other components, as necessary.

The above-mentioned other components are not particularly limited, except that components are used for typical resin products. The above-mentioned other components may be appropriately selected according to the intended purpose.

The thermoforming of the foam sheet is not particularly limited. For example, the foam sheet may be provided for a process where thermoforming is performed using a mold to obtain a product. A method of the thermoforming using a mold is not particularly limited, and any thermoforming methods for thermoplastic resins available in the related art may be used. Examples of the method include vacuum forming, pressure forming, vacuum and pressure foaming, and press forming.

Examples of the molded product (may be referred to as an article or a consumer product) include, as household goods, containers, bags, packaging containers, trays, dishes, cutleries, stationaries, and buffer materials. The term "molded product" also includes, as an intermediate product to be processed into the molded product, a roll of the foam sheet. Moreover, the term "molded product" includes, as well as the molded product itself as a single product, parts each composed of the molded product, such as handles of a tray, or a product equipped with one or more molded products, such as a tray with handles.

An embodiment of the container is not particularly limited and may be appropriately selected. For example, the container may be a container without a lid, such as a tray, or a container whose opened area is sealed with a shrink film, top sealing, or fitted lid. Moreover, the container of the present disclosure also includes a lid of a container, and the container of the present disclosure may be used as a lid of a container.

Examples of the bags include carrier bags, shopping bags, and bin bags.

Examples of the stationaries include clear files, and badges.

Moreover, the molded product may be applied for use other than the household goods. For example, the molded product may be widely applied for variety of uses, such as sheets or packaging materials for industrial materials, daily necessities, agricultural products, food products, medical products, or cosmetic products.

Moreover, the foam sheet may be subjected to processing, such as laminating and coating, as necessary. The processing may be performed before winding the foam sheet up during the production of the foam sheet, or the processing may be performed on the foam sheet that has been wound up into a roll after the production. A laminate film or coating agent used, and a processing method are not particularly limited and may be appropriately selected.

The molded product may no longer have characteristics of the foam sheet, but such molded product is still within the scope of the present disclosure, as long as the molded product uses the foam sheet as a constituent material.

<Method for producing molded product and molded product production apparatus>

The method for producing the molded product is not particularly limited, and may be appropriately selected according to a desired shape of a molded product. In the case where a molded product is produced by thermoforming, the method preferably includes a heating step and a thermoforming step, and may further include other steps, as necessary.

The molded product production apparatus is not particularly limited, and may be appropriately selected according to a desired shape of a molded product. The molded product production apparatus preferably includes a heater and a thermoforming member, and may further include other devices or members, as necessary.

The method for producing the molded product is suitably performed by the molded product production apparatus.

<<Heating step and heater>>

The heating step includes, before molding the foam sheet of the present disclosure, heating the foam sheet to soften the foam sheet.

The heater is a member configured to heat the foam sheet to soften the foam sheet before molding the foam sheet of the present disclosure.

The heating step is suitably performed by the heater.

A method for heating the foam sheet in the heating step is not particularly limited, and may be appropriately selected according to the intended purpose. Examples of the method include: a method where the heater is placed at both the upper side and the bottom side of the foam sheet, or either the upper side or the bottom side of the foam sheet to heat the foam sheet.

The heater is not particularly limited, and may be appropriately selected from heaters available in the related art. Examples of the heater include electrothermal heaters, heating plates, and infrared (IR) heaters.

The crystallization of the polylactic acid resin is preferably not carried out in the heating step before molding of the foam sheet, but the crystallization of the polylactic acid resin is preferably carried out in the following thermoforming step, because thermal resistance can be improved. Therefore, the heating step preferably includes heating the foam sheet within a short period, more preferably placing infrared (IR) heaters at the upper side and the bottom side of the foam sheet, respectively, to heat the foam sheet.

A heating temperature of the foam sheet in the heating step is not particularly limited, and may be appropriately selected according to the intended purpose. The heating is preferably performed at a temperature equal to or higher than the glass transition temperature of the polylactic acid resin, more preferably at a temperature of 60°C or higher, and yet more preferably 80°C or higher. If the foam sheet is heated at a temperature close to the cold crystallization temperature of the polylactic acid resin, crystallization of the polylactic acid resin progresses. Therefore, the highest heating temperature of the foam sheet in the heating step is preferably 110°C or lower. The lower limit and upper limit of the heating temperature may be appropriately selected. The heating temperature of the foam sheet in the heating step is more preferably 60°C or higher and 100°C or lower, particularly preferably 80°C or higher and 100°C or lower.

The heating temperature represents the temperature of the foam sheet itself. The heating time of the foam sheet in the heating step is not particularly limited, and may be appropriately selected according to the intended purpose. In view of suitable progression of crystallization, the heating time is preferably 15 seconds or shorter, more preferably 10 seconds or shorter, and yet more preferably 5 seconds or shorter.

<<Thermoforming step>>

The thermoforming step includes molding the softened foam sheet in the heating step using a mold, preferably a die. The thermoforming step preferably includes molding the foam sheet into a shape of a container.

A molding method using the mold is not particularly limited, and any thermoforming methods for thermoplastic resins available in the related art may be used. Examples of the molding method include vacuum forming, pressure forming, vacuum and pressure forming, and matched mold forming. Among the above-listed examples, matched mold forming is particularly preferred because crystallization of the polylactic acid resin of the foaming sheet is facilitated during molding to improve thermal resistance.

A temperature of the mold in the thermoforming step is not particularly limited, and may be appropriately selected according to the intended purpose. The thermoforming is preferably performed at a temperature close to the cold crystallization temperature of the polylactic acid resin to facilitate crystallization of the polylactic acid resin in the foam sheet.

In the present specification, the "temperature close to the cold crystallization temperature of the polylactic acid resin" encompasses a temperature that is equal to or higher than the cold crystallization temperature of the polylactic acid resin by 20°C or less. Specifically, the temperature of the mold in the thermoforming step is preferably 100°C or higher and 120°C or lower, more preferably 100°C or higher and 110°C or lower. As the thermoforming step is carried out with the temperature of the mold close to the cold crystallization temperature of the polylactic acid resin, a molded product having excellent thermal resistance can be obtained.

A thermoforming time in the thermoforming step is not particularly limited, and may be appropriately selected according to the intended purpose. The thermoforming time is preferably a sufficient time to crystalize the foam sheet, more preferably 5 seconds or longer, and yet more preferably 7 seconds or longer. The upper limit of the thermoforming time is not particularly limited. In view of thermal resistance, the upper limit of the thermoforming time is preferably 10 seconds or shorter. The lower limit and upper limit of the thermoforming time may be appropriately selected. The thermoforming time is preferably 5 seconds or longer and 10 seconds or shorter, more preferably 7 seconds or longer and 10 seconds or shorter.

<<Other steps and other devices or members>>

The above-mentioned other steps are not particularly limited, and may be appropriately selected according to the intended purpose. Examples of the above-mentioned other steps include releasing the molded product from the mold, punching the molded product from the foam sheet, and cutting off excess parts from the foam sheet excluding the part of the molded product.

Examples

The present disclosure will be concretely described below by way of Examples and Comparative Examples. The present disclosure should not be construed as being limited to these Examples. In Examples and Comparative Examples, "part(s)" denotes "part(s) by mass" and "%" denotes "% by mass" unless otherwise stated.

(Example 1)

<Production of foam sheet>

-Mixing and melting of constituent materials-

Using a tandem continuous-type foam sheet production apparatus 110 illustrated in Fig. 3, the constituent-material mixing and melting section a of the kneader 10 was charged with 97.7 parts of a polylactic acid resin (REVODE190, available from HISUN), 1 part of inorganic particles (M-400, available from Repco Inc.), and 1.3 parts of a chain extender (Joncy® ADR4468, available from BASF) so that a feeding rate of the resulting polylactic acid resin composition including the polylactic acid resin, the inorganic particles, and the chain extender was 20 kg/hour.

-Supply of compressible fluid, kneading and impregnation-

Subsequently, carbon dioxide in the state of a compressible fluid serving as a blowing agent was supplied to the compressible-fluid feeding section b of the kneader 10 at a feeding rate of 0.76 kg/hour (equivalent to 3.8 parts of the carbon dioxide relative to 100 parts by mass of the polylactic acid resin composition), and the resulting mixture was mixed, melted, and kneaded in the kneading section c, followed by supplying the resulting mixture to the single-screw extruder 20.

-Foaming-

Subsequently, the polylactic acid resin composition was cooled in the temperature adjusting section f of the single-screw extruder 20 until the temperature of the resin reached 160°C. Then, the polylactic acid resin composition was ejected from a circular die, which was attached to the edge of the single-screw extruder, into the atmosphere to vaporize the carbon dioxide to perform extrusion foaming. The circular die had a slit diameter of 70 mm and a gap of 0.5 mm. The surface roughness parameter Rk of the channel forming surface of the first channel forming member and the channel forming surface of the second channel forming member constituting the channel extending from the temperature adjusting section f to the opening of the slit was 3.5 $\mu$m.

The first channel forming member and the second channel forming member were each produced by processing S45C (available from MISUMI Corporation) through sandblasting (using alumina blasting abrasive media, available from MonotaRO Co., Ltd., processing angle: approximately 45 degrees).

-Molding-

The obtained cylindrical foam sheet was placed along the cooling mandrel 5 to follow the shape of the cooling mandrel 5, and air was blown onto the outer surface of the foam sheet to carry out forced cooling. The foam sheet was then cut by a rotary blade cutter to obtain a foam body in the shape of a flat sheet (may be referred to as a "foam sheet" of Example 1 hereinafter).

The temperature of each section was adjusted as follows in Example 1.

Constituent-material mixing and melting section a of kneader: 200 °C

Compressible-fluid feeding section b of kneader: 240°C
Kneading section c of kneader: 240°C
Temperature adjusting section f of single-screw extruder: cooling from 180°C to 160°C
Circular die: 160°C

The pressure of each section was adjusted as follows in Example 1.

Compressible-fluid feeding section b of kneader: from 7 MPa to 10 MPa
Kneading section c of kneader: from 8 MPa to 20 MPa
Temperature adjusting section f of single-screw extruder: from 8
MPa to 35 MPa

(Examples 2 to 5)

A foam sheet of each of Examples 2 to 5 was obtained in the same manner as in Example 1, except that the amount of the polylactic acid resin and the amount of the inorganic particles were changed to the amounts presented in Table 1-1 below.

(Example 6)

A foam sheet of Example 6 was obtained in the same manner as in Example 1, except that the inorganic particles were changed from M-400 (available from Repco Inc.) to M-200 (available from Repco Inc.).

(Example 7)

A foam sheet of Example 7 was obtained in the same manner as in Example 1, except that the inorganic particles were changed from M-400 (available from Repco Inc.) to J-31M (available from YAMAGUCHI MICA CO., LTD.).

(Example 8)

A foam sheet of Example 8 was obtained in the same manner as in Example 1, except that the inorganic particles were changed from M-400 (available from Repco Inc.) to B-82 (available from YAMAGUCHI MICA CO., LTD.).

(Examples 9 to 10)

A foam sheet of each of Examples 9 to 10 was obtained in the same manner as in Example 1, except that the inorganic particles were changed from M-400 (available from Repco Inc.) alone to a combination of M-400 and AEROSIL® RY300 (available from NIPPON AEROSIL CO., LTD.), and the amount of the polylactic acid resin and the amount of the inorganic particles were changed to the amounts presented in Table 2-1 below.

(Examples 11 to 13)

A foam sheet of Examples 11 to 13 was obtained in the same manner as in Example 1, except that the surface roughness parameter Rk of each of the first channel forming member and the second channel forming surface was changed from 3.5 μm to the values presented in Table 3-2.

(Comparative Example 1)

A foam sheet of Comparative Example 1 was obtained in the same manner as in Example 1, except that the inorganic particles were not added.

(Comparative Example 2)

A foam sheet of Comparative Example 2 was obtained in the same manner as in Example 1, except that the amount of the inorganic particles was changed to the amount presented in Table 4 below.

(Comparative Example 3)

A foam sheet of Comparative Example 3 was obtained in the same manner as in Example 1, except that the inorganic particles were changed from M-400 (available from Repco Inc.) to M-XF (available from Repco Inc.).

(Comparative Example 4)

A foam sheet of Comparative Example 4 was obtained in the same manner as in Example 1, except that the inorganic particles were changed from M-400 (available from Repco Inc.) to D-1000 (NANO ACE series, available from NIPPON TALC Co., Ltd.).

(Comparative Example 5)

A foam sheet of Comparative Example 5 was obtained in the same manner as in Example 1, except that the inorganic particles were changed from M-400 (available from Repco Inc.) to AEROSIL® RY300 (available from NIPPON AEROSIL CO., LTD.).

(Comparative Example 6)

A foam sheet of Comparative Example 6 was obtained in the same manner as in Example 1, except that the polylactic acid resin was changed from REVODE190 (available from HISUN) to REVODE110 (available from HISUN), and the temperature of the circular die was changed from 150°C to 160°C.

(Comparative Example 7)

A foam sheet of Comparative Example 7 was obtained in the same manner as in Comparative Example 5, except that the surface roughness parameter Rk of the channel forming surfaces of the first channel forming member and the second channel forming member was changed from 3.5 $\mu$m to 0.38 $\mu$m.

(Comparative Example 8)

A foam sheet of Comparative Example 8 was obtained in the same manner as in Example 1, except that, as the resin component of the polylactic acid resin composition, REVODE 190 (available from HISUN) was changed to a combination of REVODE 190 (available from HISUN) and an acrylic resin (METABLEN P-501, available from Mitsui Chemicals, Inc.), and the amount of the resin component was changed as presented in Table 5-1 below.

<Measurement of physical properties>

Each of the foam sheets of Examples 1 to 13 and Comparative Examples 1 to 8 was subjected to the measurement of "a molar ratio of D-lactic acid and L-lactic acid constituting the polylactic acid resin in the foam sheet," "an amount of the polylactic acid resin relative to a total amount of organic matter in the foam sheet," "a pore diameter (median diameter) of the foam sheet," and "a bulk density of the foam sheet." The results are presented in Tables 1-2, 2-2, 3-2, 4-2, and 5-2.

<<Measurement of molar ratio between D-lactic acid and L-lactic acid constituting polylactic acid resin in foam sheet>>

Each of the foam sheets of Examples 1 to 13 and Comparative Examples 1 to 8 was frozen and ground to prepare a powder of the foam sheet. Two hundred milligrams (200 mg) of the powder of the foam sheet obtained by the cryogenic grinding was weighed and collected in an Erlenmeyer flask using a precision balance, followed by adding 30 mL of a 1 N sodium hydroxide aqueous solution. Next, the resulting mixture was heated at 65°C, while shaking the Erlenmeyer flask, to completely dissolve the polylactic acid resin. Subsequently, pH of the resulting solution was adjusted to 7 with 1 N hydrochloric acid, and the resulting solution was diluted to the predetermined volume using a volumetric flask to obtain a polylactic acid resin solution. The polylactic acid resin solution was filtered with a membrane filter of 0.45 $\mu$m, followed by analyzing the filtrate by liquid chromatography under the following measuring conditions.

[[Measuring device and measuring conditions]]

High performance liquid chromatography (HPLC) device (liquid chromatograph): PU-2085Plus system (available from JASCO Corporation)

Column: Chromolith® coated with SUMICHIRAL OA-5000 (inner diameter: 4.6 mm, length: 250 mm)(available from Sumika Chemical Analysis Service, Ltd.)

Column temperature: 25°C

Mobile phase: a mixed liquid of a 2 mM $CuSO_4$ aqueous solution and 2-propanol ($CuSO_4$ aqueous solution:2-propanol (volume ratio) = 95:5)

Mobile phase flow rate: 1.0 mL/min

Detector: UV 254 nm

Injecting amount: 20 μL

Based on the obtained chart, the area of the peak derived from the D-lactic acid and the area of the peak derived from the L-lactic acid, and a total area were determined. Based on the determined peak areas and the total area, a peak area ratio derived from the D-lactic acid and a peak area ratio derived from the L-lactic acid were calculated and determined as abundance ratios to calculate a quantity ratio of the D-lactic acid and a quantity ratio of the L-lactic acid. An arithmetic mean of the measured values obtained by performing the above-described measurement three times was determined as an amount of the D-lactic acid or an amount of the L-lactic acid constituting the polylactic acid resin in the foam sheet. The results are presented as "molar ratio (L-lactic acid/D-lactic acid [L-lactic acid:D-lactic acid])" in Tables 1-2, 2-2, 3-2, 4-2, and 5-2 below.

<<Measurement of amount of polylactic acid resin relative to total amount of organic matter in foam sheet>>

An amount of the polylactic acid relative to a total amount of the organic matter in each of the foam sheets of Examples 1 to 13 and Comparative Examples 1 to 8 was measured in the following manner.

-Preparation of solvent-

As a solvent used for the measurement, approximately 100 mg of a 1,3,5-trimethoxybenzene standard (for quantitative NMR, available from FUJIFILM Wako Pure Chemical Corporation) was weighed as an internal standard substance, and the collected standard substance was dissolved in deuterated chloroform (including 0.3% by volume of tetramethylsilane (TMS)) in a 10 mL volumetric flask to prepare the solvent.

-Preparation of sample-

The solvent was added to each of the foam sheets of Examples 1 to 13 and Comparative Examples 1 to 8 so that a concentration of the foam sheet was 10 mg/mL. The resulting mixture was shaken by a table top shaker (MSI-60, available from AS ONE Corporation) for about half a day to dissolve the foam sheet. In order to minimize a change in the sample concentration due to evaporation of the solvent as much as possible, the smallest container available was selected for use in the shaking. The sample prepared in the above-described manner was placed in a sample tube having a diameter of 5 mm, which was provide for NMR.

-Measurement-

Quantitative $^1$H nuclear magnetic resonance spectroscopy ($^1$H-NMR) was performed by the following measuring device under the following measuring conditions according to JIS K 0138:2018 (General rules for quantitative nuclear magnetic resonance spectroscopy (qNMR)).

[[Measuring device and measuring conditions]]

Nuclear magnetic resonance (NMR) spectrometer: JNM-ECX-500 FT-NMR (available from JEOL Ltd.)

Observed nuclei: 1H

Measuring temperature: 30°C

Spin: off

Digital resolution: 0.25 Hz

Observation range: -0.5 ppm to 15 ppm

Pulse angle: 90 degrees

Relaxation time: 60 seconds
Number of integrations: 16 times (dummy scanning was performed twice before the actual measurement)
13C decoupling: performed

-Analysis-

Based on the obtained data, integration of the following chemical shift peaks was carried out to calculate an integration ratio according to the following equation (5).

```
Integration 1 (derived from polylactic acid resin): 5.2 ppm

Integration 2 (derived from internal standard): 6.1 ppm

Integration ratio = Integration 1/(Integration 2 × sample mass)

                         Equation (5)
```

NMR was performed on a polylactic acid resin whose purity was known using the same solvent used for the above-mentioned sample in the same manner as in the above-described NMR. A ratio of the integration ratio of the polylactic acid resin whose purity had been known according to the equation (5) and the integration ratio of the sample was determined to calculate an amount of the polylactic acid resin relative to a total amount of organic matter in the foam sheet according to the following equation (6).

```
Amount of polylactic acid resin [% by mass] = 100 × purity [% by

mass] of polylactic acid resin whose purity is known ×

(integration ratio of sample)/(integration ratio of polylactic

acid resin whose purity is known)

                                        Equation (6)
```

The series of processes from the preparation of the sample to the analysis was performed three times, and the arithmetic mean of the obtained amounts of the polylactic acid resin was determined as an amount of the polylactic acid resin relative to total amount of organic matter of each of the foam sheets of Examples 1 to 13 and Comparative Examples 1 to 8.

<<Measurement of pore diameter (median diameter) of foam sheet>>

Each of the foam sheet of Examples 1 to 13 and Comparative Examples 1 to 8 was cut to expose a cross section of the foam sheet using a sharp razor blade (76 Razor, available from Nisshin EM Co., Ltd.). The obtained cross section of the foam sheet was observed under a scanning electron microscope (SEM) (3D real surface view microscope, VE-9800, available from KEYENCE CORPORATION) at the magnification of 20 times to 50 times. The segmentation of the obtained image was carried out, for example, by image analysis software (for example, MorphoLibJ plugins for Image J) according to the watershed segmentation (Morphological segmentation). At the time of the segmentation, the tolerance was adjusted per image so that the segmentation was appropriately carried out. The dividing line of the segment was output as a binary image to determine a distribution of areas of air bubbles by a particle diameter analysis function of the image analysis software. During the determination of the distribution, air bubbles in contact with the edges of the image were excluded from the analysis. The cumulative distribution of the areas of the air bubbles was prepared by a spreadsheet (Excel, available from Microsoft) to determine an area at 50% of the cumulative distribution. A circle equivalent diameter of the area at 50% of the cumulative distribution was calculated and determined as a pore diameter (median diameter).

<<Measurement of bulk density of foam sheet>>

Each of the foam sheets of Examples 1 to 13 and Comparative Examples 1 to 8 was left to stand for 24 hours or longer in the environment controlled at a temperature of 23°C (degrees Celsius) and relative humidity of 50%, followed by cutting out a test piece of 50 mm × 50 mm (a square having a side of 50 mm) from the foam sheet. A bulk density of the test piece was determined by a fully automated densimeter (for example, DSG-1 available from Toyo Seiki Seisaku-sho, Ltd.) according to a buoyancy method. According to the buoyancy method, a mass (g) of the test piece of the foam sheet was accurately weighed in the atmosphere, then a mass (g) of the test piece of the foam sheet was accurately weighed in water. The bulk density was calculated from the measured values according to the following equation (1).

```
Bulk density [g/cm³] = density of water [g/cm³] × mass of test
piece in atmosphere [g]/(mass of test piece in atmosphere [g] –
mass of test piece in liquid [g])
                                                     Equation (1)
```

<Evaluations>

The foam sheets of Examples 1 to 13 and Comparative Examples 1 to 8 were each evaluated on "thermal resistance," "thermal insulation properties," "strength," and "biodegradability" in the following manner. The evaluation results are presented in Tables 1-2, 2-2, 3-2, 4-2, and 5-2.

<<Thermal resistance>>

After pre-heating each of the foam sheets of Examples 1 to 13 and Comparative Examples 1 to 8, the foam sheet was molded by heated matched metal dies for 30 seconds at 110°C into a shape of a container of an instant noodle product (diameter of opening: 180 mm, diameter of bottom: 110 mm, depth: 60 mm). Water of 25°C was poured into each of the molded products of the foam sheets of Examples 1 to 13 and Comparative Examples 1 to 8 (the containers of the instant noodle product) up to the top edge of the opening of the container. A mass of the water inside the molded product was measured, and the measured value was converted into a volume using the density of water at 25°C. The converted value was determined as an "initial volume" of the molded product.

Next, each of the molded products of the foam sheets of Examples 1 to 13 and Comparative Examples 1 to 8 was heated at 120°C for 10 minutes. After heating the molded product, water of 25°C was poured into the molded container up to the top edge of the opening. A mass of the water inside the molded product was measured, and the measured value was converted into a volume using the density of water at 25°C. The converted value was determined as a "post-heating volume" of molded product.

A volume change rate before and after heating of the molded product was calculated according to the following equation (11). The volume change rate was evaluated as an index for thermal resistance of the molded product based on the following evaluation criteria. As the evaluation result, A is the most preferred, and A and B are acceptable levels.

```
Volume change rate (%) = (initial volume – post-heating
volume)/initial volume × 100
                                                     Equation (11)
```

-Evaluation criteria for thermal resistance-

A: The volume change rate was less than 3%.
B: The volume change rate was 3% or greater and less than 10%.
C: The volume change rate was 10% or greater, or the container was deformed to the extent that the original shape was not recognized.

<<Thermal insulation properties>>

A test piece of 50 mm × 50 mm was cut out from each of the foam sheets of Examples 1 to 13 and Comparative Examples 1 to 8. The cut-out test piece was placed on a hot plate heated at 100°C and was left to stand for three minutes. After standing, a thermocouple was attached to a surface of the test piece that was at the opposite side to the heated surface to measure a surface temperature of the foam sheet. The surface temperature of the foam sheet was evaluated as an index for thermal insulation properties based on the following evaluation criteria. As the evaluation result, A is the most preferred, and A, B, and C are acceptable levels.

-Evaluation criteria for thermal insulation properties-

A: The surface temperature of the foam sheet was lower than 45°C.
B: The surface temperature of the foam sheet was 45°C or higher and lower than 55°C.
C: The surface temperature of the foam sheet was 55°C or higher and lower than 65°C.
D: The surface temperature of the foam sheet was 65°C or higher.

<<Strength>>

A test piece having a rectangular shape was cut out from each of the foam sheets of Examples 1 to 13 and Comparative Examples 1 to 8. The test piece was cut out from each foam sheet in a manner that a length direction of the rectangular test piece was the machine direction (MD) 25 mm (width) ×80 mm (length). The maximum point of the load (N) was measured using the cut-out sample piece under the following measuring conditions and the following analysis method, and the measured maximum load point (N) was evaluated as an index for strength based on the following evaluation criteria. As the evaluation result, A is the most preferred, and A, B, and C are acceptable levels.

[[Measuring conditions]]

Device: precision universal testing machine AUTOGRAPH (available from Shimadzu Corporation)
Load cell: 50 N
Jig: 3-point bending test jig
Distance between support points: 32 mm
Bending speed: 100 mm/min
Test piece width: measured value (measured by a digital micrometer, a caliper, etc.)
Endpoint of test: After detecting the maximum peak, the operation was manually terminated.

[[Analysis method]]

The maximum point of the load (unit: N) was read.
The measuring was performed three times (n = 3) by carrying the sampling position, and the arithmetic mean of the measured values was determined.

-Evaluation criteria for strength-

A: The maximum point of the load was 14 N or greater.

B: The maximum point of the load was 12 N or greater and less than 14 N.

C: The maximum point of the load was 10 N or greater and less than 12 N.

D: The maximum point of the load was 8 N or greater and less than 10 N.

E: The maximum point of the load was less than 8 N.

<<Biodegradability>>

The biodegradability of each of the foam sheets of Examples 1 to 13 and Comparative Examples 1 to 8 was measured according to JISK6953-2, and the result was evaluated based on the following evaluation criteria. As the evaluation result, A is the most preferred, and A is an acceptable level.

-Evaluation criteria for biodegradability-

A: The biodegradability was 60% or greater within 6 months.
B: The biodegradability was less than 60% within 6 months.

Table 1-1

| | | | Ex. 1 | Ex. 2 | Ex. 3 | Ex. 4 | Ex. 5 |
|---|---|---|---|---|---|---|---|
| Components of polylactic acid resin composition [parts by mass] | Polylactic acid resin | REVODE 190 | 97.7 | 97.0 | 98.2 | 96.7 | 98.4 |
| | | REVODE 110 | | | | | |
| | Resin component other than polylactic acid resin | Metablen P-501 (acrylic resin) | | | | | |
| | Chain extender (crosslinking agent) | Joncryl® ADR4468 | 1.3 | 1.3 | 1.3 | 1.3 | 1.3 |
| | Inorganic particles | M-400 (mica) | 1.0 | 1.7 | 0.5 | 2.0 | 0.3 |
| | | M-200 (mica) | | | | | |
| | | J-31M (mica) | | | | | |
| | | B-82 (mica) | | | | | |
| | | M-XF (mica) | | | | | |
| | | D-1000 (talc) | | | | | |
| | | AEROS IL® RY300 (silica) | | | | | |

Table 1-2

| | | | Ex. 1 | Ex. 2 | Ex. 3 | Ex. 4 | Ex. 5 |
|---|---|---|---|---|---|---|---|
| Physical properties of polylactic acid resin composition | Polylactic acid resin | Molar ratio (L-lactic acid/D-lactic acid) [mol%] | 98.8/1.2 | 98.8/1.2 | 98.8/1.2 | 98.8/1.2 | 98.8/1.2 |
| | | Amount of polylactic acid resin relative to total amount of organic matter [mass%] | 98.7 | 98.7 | 98.7 | 98.7 | 98.7 |
| | Sheet silicate | Mv [$\mu$m] | 17.2 | 17.2 | 17.2 | 17.2 | 17.2 |
| | | Aspect ratio | 25 | 25 | 25 | 25 | 25 |
| Foaming | | Rk of channel forming surface [$\mu$m] | 3.5 | 3.5 | 3.5 | 3.5 | 3.5 |
| Physical properties of foam sheet | | Pore diameter (median diameter) [$\mu$m] | 610 | 536 | 732 | 428 | 833 |
| | | Bulk density [g/cm$^3$] | 0.078 | 0.096 | 0.134 | 0.166 | 0.151 |
| Evaluation results | | Thermal resistance | A | A | A | A | A |
| | | Thermal insulation properties | A | A | A | B | B |
| | | Strength | A | A | B | C | B |
| | | Biodegradability | A | A | A | A | A |

Table 2-1

| Components of polylactic acid resin composition [parts by mass] | | | | Ex. 6 | Ex. 7 | Ex. 8 | Ex. 9 | Ex. 10 |
|---|---|---|---|---|---|---|---|---|
| | Polylactic acid resin | | REVODE 190 | 97.7 | 97.7 | 97.7 | 95.7 | 96.2 |
| | | | REVODE 110 | | | | | |
| | Resin component other than polylactic acid resin | | Metablen P-501 (acrylic resin) | | | | | |
| | Chain extender (crosslinking agent) | | Joncryl® ADR4468 | 1.3 | 1.3 | 1.3 | 1.3 | 1.3 |
| | Inorganic particles | | M-400 (mica) | | | | 1.0 | 1.0 |
| | | | M-200 (mica) | 1.0 | | | | |
| | | | J-31M (mica) | | 1.0 | | | |
| | | | B-82 (mica) | | | 1.0 | | |
| | | | M-XF (mica) | | | | | |
| | | | D-1000 (talc) | | | | | |
| | | | AEROS IL® RY300 (silica) | | | | 2.0 | 1.5 |

Table 2-2

| | | | Ex. 6 | Ex. 7 | Ex. 8 | Ex. 9 | Ex. 10 |
|---|---|---|---|---|---|---|---|
| Physical properties of polylactic acid resin composition | Polylactic acid resin | Molar ratio (L-lactic acid/D-lactic acid) [mol%] | 98.8/ 1.2 | 98.8/ 1.2 | 98.8/ 1.2 | 98.8/ 1.2 | 98.8/ 1.2 |
| | | Amount of polylactic acid resin relative to total amount of organic matter [mass%] | 98.7 | 98.7 | 98.7 | 98.7 | 98.7 |
| | Sheet silicate | Mv [μm] | 54.1 | 24.5 | 189.0 | 17.2 | 17.2 |
| | | Aspect ratio | 33 | 75 | 98 | 25 | 25 |
| Foaming | | Rk of channel forming surface [μm] | 3.5 | 3.5 | 3.5 | 3.5 | 3.5 |
| Physical properties of foam sheet | | Pore diameter (median diameter) [μm] | 581 | 593 | 687 | 186 | 212 |
| | | Bulk density [g/cm$^3$] | 0.091 | 0.089 | 0.161 | 0.113 | 0.104 |
| Evaluation results | Thermal resistance | | A | A | A | A | A |
| | Thermal insulation properties | | A | A | B | A | A |
| | Strength | | A | A | C | B | A |
| | Biodegradability | | A | A | A | A | A |

Table 3-1

| | | | Ex. 11 | Ex. 12 | Ex. 13 |
|---|---|---|---|---|---|
| Components of polylactic acid resin composition [parts by mass] | Polylactic acid resin | REVODE 190 | 97.7 | 97.7 | 97.7 |
| | | REVODE 110 | | | |
| | Resin component other than polylactic acid resin | Metablen P-501 (acrylic resin) | | | |
| | Chain extender (crosslinking agent) | Joncryl® ADR4468 | 1.3 | 1.3 | 1.3 |
| | Inorganic particles | M-400 (mica) | 1.0 | 1.0 | 1.0 |
| | | M-200 (mica) | | | |
| | | J-31M (mica) | | | |
| | | B-82 (mica) | | | |
| | | M-XF (mica) | | | |
| | | D-1000 (talc) | | | |
| | | AEROS IL® RY300 (silica) | | | |

Table 3-2

| | | | Ex. 11 | Ex. 12 | Ex. 13 |
|---|---|---|---|---|---|
| Physical properties of polylactic acid resin composition | Polylactic acid resin | Molar ratio (L-lactic acid/D-lactic acid) [mol%] | 98.8/1.2 | 98.8/1.2 | 98.8/1.2 |
| | | Amount of polylactic acid resin relative to total amount of organic matter [mass%] | 98.7 | 98.7 | 98.7 |
| | Sheet silicate | Mv [$\mu$m] | 17.2 | 17.2 | 17.2 |
| | | Aspect ratio | 25 | 25 | 25 |
| Foaming | | Rk of channel forming surface [$\mu$m] | 0.4 | 1.22 | 6.0 |
| Physical properties of foam sheet | | Pore diameter (median diameter) [$\mu$m] | 598 | 576 | 632 |
| | | Bulk density [g/cm$^3$] | 0.138 | 0.116 | 0.108 |
| Evaluation results | Thermal resistance | | A | A | A |
| | Thermal insulation properties | | A | A | A |
| | Strength | | C | B | B |
| | Biodegradability | | A | A | A |

Table 4-1

| | | | Comp. Ex. 1 | Comp. Ex. 2 | Comp. Ex. 3 | Comp. Ex. 4 | Comp. Ex. 5 |
|---|---|---|---|---|---|---|---|
| Components of polylactic acid resin composition [parts by mass] | Polylactic acid resin | REVODE 190 | 98.7 | 96.2 | 97.7 | 97.7 | 97.7 |
| | | REVODE 110 | | | | | |
| | Resin component other than polylactic acid resin | Metablen P-501 (acrylic resin) | | | | | |
| | Chain extender (crosslinking agent) | Joncryl® ADR4468 | 1.3 | 1.3 | 1.3 | 1.3 | 1.3 |
| | Inorganic particles | M-400 (mica) | | 2.5 | | | |
| | | M-200 (mica) | | | | | |
| | | J-31M (mica) | | | | | |
| | | B-82 (mica) | | | | | |
| | | M-XF (mica) | | | 1.0 | | |
| | | D-1000 (talc) | | | | 1.0 | |
| | | AEROS IL® RY300 (silica) | | | | | 1.0 |

Table 4-2

| | | | Comp. Ex. 1 | Comp. Ex. 2 | Comp. Ex. 3 | Comp. Ex. 4 | Comp. Ex. 5 |
|---|---|---|---|---|---|---|---|
| Physical properties of polylactic acid resin composition | Polylactic acid resin | Molar ratio (L-lactic acid/D-lactic acid) [mol%] | 98.8/ 1.2 | 98.8/ 1.2 | 98.8/ 1.2 | 98.8/ 1.2 | 98.8/ 1.2 |
| | | Amount of polylactic acid resin relative to total amount of organic matter [mass%] | 98.7 | 98.7 | 98.7 | 98.7 | 98.7 |
| | Sheet silicate | Mv [$\mu$m] | | 17.2 | 2.9 | 2.5 | |
| | | Aspect ratio | | 25 | 15 | 6 | |
| Foaming | | Rk of channel forming surface [$\mu$m] | 3.5 | 3.5 | 3.5 | 3.5 | 3.5 |
| Physical properties of foam sheet | | Pore diameter (median diameter) [$\mu$m] | 2,411 | 398 | 802 | 968 | 453 |
| | | Bulk density [g/cm$^3$] | 0.208 | 0.215 | 0.174 | 0.184 | 0.192 |
| Evaluation results | Thermal resistance | | A | A | A | A | A |
| | Thermal insulation properties | | D | C | C | C | C |
| | Strength | | D | D | C | C | C |
| | Biodegradability | | A | A | A | A | A |

## EP 4 428 182 A1

Table 5-1

| Components of polylactic acid resin composition [parts by mass] | | | Comp. Ex. 6 | Comp. Ex. 7 | Comp. Ex. 8 |
|---|---|---|---|---|---|
| Polylactic acid resin | REVODE 190 | | | 97.7 | 96.7 |
| | REVODE 110 | | 97.7 | | |
| Resin component other than polylactic acid resin | Metablen P-501 (acrylic resin) | | | | 1.0 |
| Chain extender (crosslinking agent) | Joncryl® ADR4468 | | 1.3 | 1.3 | 1.3 |
| Inorganic particles | M-400 (mica) | | 1.0 | | 1.0 |
| | M-200 (mica) | | | | |
| | J-31M (mica) | | | | |
| | B-82 (mica) | | | | |
| | M-XF (mica) | | | | |
| | D-1000 (talc) | | | | |
| | AEROS IL® RY300 (silica) | | | 1.0 | |

Table 5-2

| Physical properties of polylactic acid resin composition | | | Comp. Ex. 6 | Comp. Ex. 7 | Comp. Ex. 8 |
|---|---|---|---|---|---|
| | Polylactic acid resin | Molar ratio (L-lactic acid/D-lactic acid) [mol%] | 97.7/2.3 | 98.8/1.2 | 98.8/1.2 |
| | | Amount of polylactic acid resin relative to total amount of organic matter [mass%] | 98.7 | 98.7 | 97.7 |
| | Sheet silicate | Mv [$\mu$m] | 17.2 | | 17.2 |
| | | Aspect ratio | 25 | | 25 |
| Foaming | | Rk of channel forming surface [$\mu$m] | 3.5 | 0.4 | 3.5 |
| Physical properties of foam sheet | | Pore diameter (median diameter) [$\mu$m] | 580 | 467 | 680 |
| | | Bulk density [g/cm$^3$] | 0.083 | 0.198 | 0.098 |
| Evaluation results | | Thermal resistance | C | A | A |
| | | Thermal insulation properties | A | C | A |
| | | Strength | B | D | A |
| | | Biodegradability | A | A | B |

For example, embodiments of the present disclosure are as follows.

<1> A foam sheet including:
a polylactic acid resin composition that includes a polylactic acid resin and inorganic particles,

the polylactic acid resin including 98 mol% or greater of D-lactic acid or L-lactic acid that is a constituent monomer unit of the polylactic acid resin, and an amount of the polylactic acid resin being 98% by mass or greater relative to a total amount of organic matter of the foam sheet, and

the inorganic particles including grains of sheet silicate, the grains of the sheet silicate have a mean volume diameter of 10 μm or greater and 200 μm or less, and an aspect ratio of 10 or greater and 100 or less, and an amount of the grains of the sheet silicate in the foam sheet being 2% by mass or less.

<2> The foam sheet according to <1>,
wherein the sheet silicate is mica.
<3> The foam sheet according to <1> or <2>,
wherein an amount of the grains of the sheet silicate in the foam sheet is 1.0% by mass or greater and 1.7% by mass or less.
<4> The foam sheet according to according to any one of <1> to <3>,
wherein the foam sheet has a bulk density of 0.063 g/cm$^3$ or greater and 0.156 g/cm$^3$ or less.
<5> The foam sheet according to any one of <1> to <4>,
wherein the foam sheet includes pores having a median diameter of 200 μm or greater and 800 μm or less.
<6> A method for producing the foam sheet of any one of <1> to <5>, the method including:

kneading the polylactic acid resin and the inorganic particles to prepare the polylactic acid resin composition;
kneading the polylactic acid resin composition with a blowing agent to prepare a foamable polylactic acid resin composition; and
passing the foamable polylactic acid resin composition through a channel of a die to extrude the foamable polylactic acid resin composition and vaporize the blowing agent to foam the polylactic acid resin composition.

<7> The method according to <6>,

wherein the die includes a first channel forming member and a second channel forming member that form at least a cylindrical channel,
at least one of a channel forming surface of the first channel forming member and a channel forming surface of the second channel forming member has a surface roughness parameter Rk of 1.0 μm or greater and 6.3 μm or less.

<8> A molded product including:
the foam sheet of any one of <1> to <5> having a shape achieved by thermoforming.
<9> A method for producing a molded product, the method including:
thermoforming the foam sheet of any one of <1> to <5>.

The foam sheet according to any one of <1> to <5>, the method for producing the foam sheet according to <6> or <7>, the molded product according to <8>, and the method for producing molded product according to <9> can solve the above-described various problems existing in the related art, and can achieve the above-described object of the present disclosure.

**Claims**

1. A foam sheet, comprising:
   a polylactic acid resin composition that includes a polylactic acid resin and inorganic particles,

   the polylactic acid resin including 98 mol% or greater of D-lactic acid or L-lactic acid that is a constituent monomer unit of the polylactic acid resin, and an amount of the polylactic acid resin being 98% by mass or greater relative to a total amount of organic matter of the foam sheet, and
   the inorganic particles including grains of sheet silicate, the grains of the sheet silicate have a mean volume diameter of 10 μm or greater and 200 μm or less, and an aspect ratio of 10 or greater and 100 or less, and an amount of the grains of the sheet silicate in the foam sheet being 2% by mass or less.

2. The foam sheet according to claim 1,
   wherein the sheet silicate is mica.

3. The foam sheet according to claim 1 or 2,

wherein an amount of the sheet silicate in the foam sheet is 1.0% by mass or greater and 1.7% by mass or less.

4. The foam sheet according to any one of claims 1 to 3,
   wherein the foam sheet has a bulk density of 0.063 g/cm$^3$ or greater and 0.156 g/cm$^3$ or less.

5. The foam sheet according to any one of claims 1 to 4,
   wherein the foam sheet includes pores having a median diameter of 200 $\mu$m or greater and 800 $\mu$m or less.

6. A method for producing the foam sheet of any one of claims 1 to 5, the method comprising:

   kneading the polylactic acid resin and the inorganic particles to prepare the polylactic acid resin composition;
   kneading the polylactic acid resin composition with a blowing agent to prepare a foamable polylactic acid resin composition; and
   passing the foamable polylactic acid resin composition through a channel of a die to extrude the foamable polylactic acid resin composition and vaporize the blowing agent to foam the polylactic acid resin composition.

7. The method according to claim 6,

   wherein the die includes a first channel forming member and a second channel forming member that form at least a cylindrical channel,
   at least one of a channel forming surface of the first channel forming member and a channel forming surface of the second channel forming member has a surface roughness parameter Rk of 1.0 $\mu$m or greater and 6.3 $\mu$m or less.

8. A molded product comprising:
   the foam sheet of any one of claims 1 to 5 having a shape achieved by thermoforming.

# FIG.1

# FIG.2

# FIG.3

# FIG.4

Europäisches
Patentamt

European
Patent Office

Office européen
des brevets

# EUROPEAN SEARCH REPORT

Application Number

EP 24 15 4401

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/081554 A1 (FUKUYAMA EIJI [JP] ET AL) 17 March 2022 (2022-03-17) <br> * paragraphs [0214] - [0227]; example 1 * <br> * paragraph [0106] * <br> ----- | 1-8 | INV. <br> C08J9/00 <br> B29C44/00 <br> C08J9/12 |
| E | EP 4 361 205 A1 (RICOH CO LTD [JP]) 1 May 2024 (2024-05-01) <br> * examples 11, 13-15; table 2 * <br> * paragraph [0162]; claim 13; figure 1; table 1 * <br> ----- | 1-6,8 | |
| A | JP 2022 083401 A (RICOH CO LTD) 3 June 2022 (2022-06-03) <br> * paragraphs [0042] - [0044], [0053]; examples 1-6, 8-12; tables 1-2 * <br> ----- | 1-8 | |

|  |
|---|
| **TECHNICAL FIELDS SEARCHED (IPC)** |
| C08J <br> B29C |

The present search report has been drawn up for all claims

| Place of search | Date of completion of the search | Examiner |
|---|---|---|
| The Hague | 18 July 2024 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ..................................................................

& : member of the same patent family, corresponding document

EPO FORM 1503 03.82 (P04C01)

**EP 4 428 182 A1**

## ANNEX TO THE EUROPEAN SEARCH REPORT
## ON EUROPEAN PATENT APPLICATION NO.

EP 24 15 4401

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2024

| Patent document cited in search report | | Publication date | Patent family member(s) | | Publication date |
|---|---|---|---|---|---|
| US 2022081554 | A1 | 17-03-2022 | CN | 113366053 A | 07-09-2021 |
| | | | EP | 3950793 A1 | 09-02-2022 |
| | | | JP | 7246223 B2 | 27-03-2023 |
| | | | JP | 2020158608 A | 01-10-2020 |
| | | | KR | 20210109006 A | 03-09-2021 |
| | | | TW | 202043328 A | 01-12-2020 |
| | | | US | 2022081554 A1 | 17-03-2022 |
| | | | WO | 2020194172 A1 | 01-10-2020 |
| EP 4361205 | A1 | 01-05-2024 | CN | 117946503 A | 30-04-2024 |
| | | | EP | 4361205 A1 | 01-05-2024 |
| | | | JP | 2024065500 A | 15-05-2024 |
| | | | US | 2024141120 A1 | 02-05-2024 |
| JP 2022083401 | A | 03-06-2022 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2007046019 A
- JP 5207277 B
- JP 5454137 B
- JP 2006328225 A
- JP 4842745 B
- JP 2020158608 A

**Non-patent literature cited in the description**

- **YOSHIO INOUE.** Structure, properties, and biodegradability of aliphatic polyesters. *POLYMERS,* 2001, vol. 50 (6), 374-377